(19) Europäisches Patentamt
European Patent Office
Office européen des brevets

(11) **EP 1 426 732 A1**

(12) **EUROPEAN PATENT APPLICATION**

(43) Date of publication:
**09.06.2004 Bulletin 2004/24**

(51) Int Cl.⁷: **G01B 11/26**, G01C 3/00, H04N 5/74, G03B 21/53

(21) Application number: **03027395.7**

(22) Date of filing: **27.11.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (71) Applicant: **Seiko Precision Inc.**<br>**Narashino-shi, Chiba-ken (JP)** |
| (30) Priority: **29.11.2002 JP 2002347432**<br>**03.12.2002 JP 2002351004**<br>**12.12.2002 JP 2002360420** | (72) Inventor: **Kanemitsu, Shiroshl**<br>**Narashino-shi Chiba-ken (JP)**<br><br>(74) Representative: **Grünecker, Kinkeldey,**<br>**Stockmair & Schwanhäusser Anwaltssozietät**<br>**Maximilianstrasse 58**<br>**80538 München (DE)** |

(54) **Angle detection apparatus, projector including the same, and angle detection method**

(57) When a projection optical axis of a projector does not impinge on a plane of a screen vertically, a trapezoidal distortion occurs in an image on the screen. In order to correct the trapezoidal distortion, there is provided an angle detection apparatus for automatically accurately detecting a relative inclination angle between the projector and the screen. The angle detection apparatus of the invention includes a distance measuring part for obtaining distances to plural different measurement positions on a straight line extending on a planar body as a measurement object, a typical value calculation part for dividing the plural measurement positions into plural small groups spatially adjacent to each other, and obtaining a typical value of distances as distance measuring results by the distance measuring part in each of the small groups, and an inclination angle calculation part for calculating an inclination angle between the distance measuring part and the measurement object in a plane vertical to the measurement object including the straight line.

FIG.1

EP 1 426 732 A1

## Description

BACKGROUND OF THE INVENTION

1. Field of the Invention

The present invention relates to an angle detection apparatus using a line type distance measuring device and to a projector including the same.

2. Description of the Related Art

In the case where a projector such as a liquid crystal projector is used, there is a disadvantage that a distortion called a trapezoidal distortion occurs in an image projected on a screen due to a relative positional relation between a projection optical axis of the projector and a screen plane on which an image is projected by the projector. The trapezoidal distortion occurs since, when the projector projects an image from a forward place of the screen, the position of the projector is shifted from the center of the screen in order not to disturb a viewer, so that the projection optical axis of the projector is not vertical to the screen plane but is inclined, and as a result, the upper part of the screen comes to be located farther (or nearer) than the lower part of the screen from the projector. Besides, it occurs also when the right side of the screen comes to be located farther (or nearer) than the left side of the screen from the projector.

Conventionally, in order to automatically correct the trapezoidal distortion, an electrical correction method in which an inclination angle indicating the degree of inclination from a state in which the screen plane is vertical to the projection optical axis of the projector is automatically detected, and in accordance with the detected inclination angle, a video circuit in the inside of the projector creates an image having a trapezoidal distortion opposite to the projection image, and projects it, or an optical correction method for adjusting the inclination of a projection lens (condensing lens) of a projection optical system of the projector is used (patent document 1)

[Patent document 1]

JP-A-2000-122617 (see column 0044 and Fig. 2)

As a conventional angle detection apparatus for automatically detecting the relative inclination angle indicating the degree of inclination from the state in which the projection optical axis of the projector is vertical to the screen plane, there is one disclosed in the patent document 1. According to the patent document 1, two active distance measuring sensors are disposed on an upper and a lower places of the front of a projector body 1 to be spaced from each other by a predetermined distance in the vertical direction, and measure their respective distances from the screen to obtain the relative inclination angle.

However, in the conventional angle detection apparatus disclosed in the patent document 1, since the structure is such that the two distances are measured to obtain the relative inclination angle by which the projection optical axis of the projector is inclined from the vertical direction with respect to the screen plane, there has been a problem that when one of or both of the two distance measurements are not accurately performed by noise or the like, the detection accuracy of the inclination angle is degraded, and the correction of the trapezoidal distortion can not be accurately performed.

SUMMARY OF THE INVENTION

Accordingly, an object of the invention is to provide an angle detection apparatus using a distance measuring device which can detect an inclination angle as accurately as possible even in the case where one distance can not be accurately measured due to noise or the like, and to provide a projector including the same. Incidentally, in order to solve the above problem, the applicant filed Japanese Patent Application No. 2002-253402 on August 30, 2002, and the present invention also relates to the invention of this prior application.

According to a first aspect of the invention, there is provided an angle detection apparatus which comprises a line type distance measuring device including a pair of lenses disposed on a same plane to be spaced from each other by a base line length, a line sensor spaced from the pair of lenses by a predetermined distance, disposed to extend in a direction of the base line length, and made of a line of plural detectors on which a planar body as a distance measurement object is imaged through the pair of lenses, and an arithmetic part for calculating distances to plural different positions on the measurement object in plural different distance measuring directions on a plane including the base line length and the line sensor on the basis of output from the line sensor, and is characterized by including typical value calculation means for forming plural small groups including some of the positions spatially adjacent to each other from the plural positions and calculating a typical value of the distances calculated by the arithmetic part for each of the small groups, and inclination angle calculation means for calculating, on the plane including the base line length and the line sensor, an inclination angle of the planar body with respect to the same plane on the basis of the typical value.

According to such structure of the invention, when the distances to the plural positions arranged linearly on the planar body of the measurement object are measured by the line type distance measuring device, the typical value of the measured distances is calculated for each of the small groups made of the some adjacent positions on the measurement object, and accordingly, even if distance measurement to one position on the planar body of the measurement object can not be accurately performed due to noise or the like or manufacture error, its influence can be reduced. As stated above, even in the case where the distance measurement of at least one position can not be accurately performed, its influence can be reduced. Further, one line type distance measuring device is provided, so that the distances to the plural different positions on the planar body of the measurement object can be measured, and therefore, it is not necessary to increase the number of distance measuring devices in accordance with the increase of measurement positions as in the conventional apparatus, and the structure of the angle detection apparatus can be simplified.

According to a second aspect of the invention, in the recitation of the first aspect, there is provided the angle detection apparatus characterized in that the typical value calculated by the typical value calculation means is an average value of the measurement distances in the small group.

According to such structure of the invention, when the line type distance measuring device measures the distances to the plural positions arranged linearly on the planar body of the measurement object, the typical value of the measured distances is calculated from the average value of the measurement distances, and therefore, even if the distance measurement to one position on the planar body of the measurement object can not be accurately performed due to the noise or the like or the manufacture error, its influence can be reduced.

According to a third aspect of the invention, in the recitation of the first or the second aspect, there is provided the angle detection apparatus characterized in that the line sensor includes a first light receiving area in which one of a pair of images of the measurement object created by the pair of lenses is imaged, and a second light receiving area in which the other of the pair of images is imaged, the first light receiving area includes plural distance measuring arithmetic areas respectively set to correspond to the plural different distance measuring directions, the arithmetic part obtains the distances to the plural positions in the plural distance measuring directions by performing a distance measuring arithmetic operation on the basis of output from the distance measuring arithmetic areas in the first light receiving area and output from the second light receiving area, the typical value calculation part further calculates a contrast centroid position of each of the plural distance measuring arithmetic areas and obtains a centroid position typical value of a contrast distribution in the plural distance measuring arithmetic areas corresponding to each of the small groups, and the inclination angle calculation part calculates, on the plane including the base line length and the line sensor, the inclination angle of the planar body of the measurement object with respect to the same plane on the basis of the typical value of the distances calculated by the typical value calculation part and the centroid position typical value of the contrast distribution.

According to such structure of the invention, in the plural distance measuring arithmetic areas of the line sensor corresponding to each of the small groups, the centroid position typical value of the contrast distribution is obtained, and the obtained centroid position typical value of the contrast distribution and the typical value of the measured distances are used to obtain the inclination angle of the measurement object. As a result, the angle detection apparatus having high accuracy can be achieved.

According to a fourth aspect of the invention, in the recitation of any one of the first to the third aspects, there is provided the angle detection apparatus characterized in that the arithmetic part further comprises a judgment part for judging, with respect to distance measuring results obtained by performing the distance measuring arithmetic operation of the distances to the plural different positions on the measurement object, existence of reliability of the distance measuring results of the distance measuring arithmetic operation on the basis of a correlation of the plural different positions in each of the small groups, and the typical value calculation part calculates the typical value of the distance measurements from the distance measuring results of the small group judged to have the reliability by the judgment part.

According to such structure of the invention, the reliability of the distance measuring result is judged on the basis of the correlation of the distance measuring results for each of the small groups including some spatially adjacent positions on the measurement object, the distance measuring result judged to have no reliability is excluded from a subsequent angle detection processing, and the distance measuring result judged to have the reliability is used in the subsequent angle detection processing. As a result, the angle detection apparatus having high accuracy can be achieved.

According to a fifth aspect of the invention, there is provided an angle detection apparatus characterized by comprising a distance measuring part for obtaining distances to plural measurement positions arranged on a straight line extending on a planar body as a measurement object, a typical value calculation part for dividing the plural measurement positions into plural small groups spatially adjacent to each other and obtaining a typical value of the distances as distance measuring results by the distance measuring part in each of the small groups, and an inclination angle calculation part for calculating an inclination angle between the distance measuring part and the measurement object on the basis of the typical value of the distances.

According to such structure of the invention, when the distances to the plural positions arranged on the certain straight line extending on the planar body as the measurement object are measured by the distance measuring part, the typical value of the distances measured for each of the small groups made of some positions adjacent to each other on the measurement object is calculated, and therefore, even in the case where distance measurement to one position on the planar body of the measurement object can not be accurately performed due to noise or the like or manufacture error, its influence can be reduced. Accordingly, since the distance measurement becomes accurate, the angle detection apparatus having high accuracy based on the accurate distance measurement can be achieved.

According to a sixth aspect of the invention, there is provided an angle detection apparatus characterizing by comprising a line type distance measuring device including a pair of lenses disposed on a same plane to be spaced from each other by a base line length, a line sensor spaced from the pair of lenses by a predetermined distance, disposed to extend in a direction of the base line length, and made of a line of plural detectors on which a planar body as a distance measurement object is imaged through the pair of lenses, and an arithmetic part for calculating distances to plural different positions on the measurement object in plural different distance measuring directions on a plane including the base line length and the line sensor on the basis of output from the line sensor; a judgment part for judging existence of reliability of the distances as arithmetic operation results of the arithmetic part by forming a small group including the some positions from the plural positions and on the basis of a correlation of the arithmetic operation results in the small group, and an inclination angle calculation part for calculating an inclination angle of the planar body with respect to the same plane on the plane,including the base line length and the line sensor on the basis of the arithmetic operation results judged to have the reliability by the judgment part.

According to such structure of the invention, when the distances to the plural positions arranged linearly on the planar body of the measurement object are measured by the line type distance measuring device, on the basis of the principle that the measurement distances are linearly changed, it is possible to judge the existence of mutual reliability of the distances measured for the respective small groups each made of the some positions on the measurement object, and therefore, even if the distance measurement to one position on the planar body of the measurement object can not be accurately performed due to noise or the like or manufacture error, its influence can be reduced. As stated above, the distance measuring results with reliability are judged and are used for the angle detection so that the angle detection with high accuracy can be performed. Further, the one line type distance measuring device is provided, so that it becomes possible to measure the distances to the plural mutually different positions on the planar body of the measurement object, and therefore, it is not necessary to increase the number of distance measuring devices in accordance with the increase of the measurement positions as in the conventional apparatus, and the structure of the angle detection apparatus can be simplified.

According to a seventh aspect of the invention, in the recitation of the sixth aspect, there is provided the angle detection apparatus characterized in that the judgment part judges the existence of the reliability of the arithmetic results on the basis of whether the arithmetic results correspond to a desired straight line to be determined by the arithmetic results in the small group.

According to such structure of the invention, when the line type distance measuring device measures the distances to the plural positions arranged linearly on the planar body of the measurement object, on the basis of the principle that the measurement distances are linearly changed, the existence of the reliability of the arithmetic results of the distance measurement is judged in the small group of some distance measuring results on the basis of whether the distances of the measurement results have the linear relation to each other, and therefore, even if the distance measurement to one position on the planar body of the measurement object can not be accurately performed due to noise or the like or manufacture error, its influence can be reduced.

According to an eighth aspect of the invention, in the recitation of the sixth aspect, there is provided the angle detection apparatus characterized in that the judgment part judges the existence of the reliability of the arithmetic results on the basis of whether the arithmetic results are included in a desired reliability judgment area to be determined by the arithmetic results in the small group.

According to such structure of the invention, when the line type distance measuring device measures the distances to the plural positions arranged linearly on the planar body of the measurement object, on the basis of the principle that the measurement distance is linearly changed, it becomes possible to judge the existence of the reliability of the arithmetic results of the distance measurement in the small group of the some distance measuring results on the basis of whether the distances of the measurement results have the linear relation to each other, and therefore, even in the case where the distance measurement to one position on the planar body of the measurement object can not be accurately performed due to noise or the like or manufacture error, its influence can be reduced.

According to a ninth aspect of the invention, in the recitation of the seventh or eighth aspect, there is provided the angle detection apparatus characterized in that the small group includes three positions adjacent to each other, and the judgment part judges whether the arithmetic result of the center position corresponds to or contained in the desired straight line or the reliability judgment area to be determined by the arithmetic results of two positions of both ends of the three positions.

According to such structure of the invention, the small group includes the three positions adjacent to each other, and in order to enable the judgment as to whether the measurement distances of the positions on the planar body of the measurement object are based on the correlation that they are linearly changed, the judgment part judges whether the distance measuring result of the center position corresponds to or contained in the desired straight line or the reliability judgment area to be determined by the distance measuring results of the two positions of both the ends, and in the case where the distance measuring result of the center position deviates from the correlation by a predetermined value or higher, they are judged to have no reliability and are removed from a subsequent angle detection processing, and in the case where the distance measuring result of the center position remains in a range of the predetermined value from the correlation, they are judged to have reliability and are used for the subsequent angle detection. As a result, the angle detection apparatus with high accuracy can be achieved.

According to a tenth aspect of the invention, in the seventh or eighth aspect, there is provided the angle detection apparatus characterized in that the line sensor includes a first light receiving area in which one of a pair of images of the measurement object created by the pair of lenses is imaged and a second light receiving area in which the other of the pair of images is imaged, plural distance measuring arithmetic areas corresponding to the plural distance measuring directions are set in the first light receiving area, and the arithmetic part performs a distance measuring arithmetic operation concerning the plural distance measuring directions on the basis of output from the distance measuring arithmetic areas in the first light receiving area and output from the second light receiving area.

According to such structure of the invention, the line sensor includes the first and the second light receiving areas in which the pair of images of the measurement object are respectively imaged, the plural distance measuring arithmetic areas are set in the first light receiving area, and the image corresponding to the image imaged in each of the distance measuring arithmetic areas is detected in the second light receiving area, so that the distance measurement to the positions on the planar body of the measurement object in the plural distance measuring directions corresponding to the plural distance measuring arithmetic areas can be achieved by the simple structure.

According to an eleventh aspect of the invention, in the tenth aspect, there is provided the angle detection apparatus characterized in that the small group includes positions corresponding to three distance measuring directions adjacent to each other, and the judgment part judges whether an arithmetic result of a position corresponding to the center distance measuring direction corresponds to a desired linear relation to be determined by two arithmetic results of the positions corresponding to the distance measuring directions of both ends in the three distance measuring directions.

According to such structure of the invention, in order to judge whether the measurement distances of the positions on the planar body of the measurement object are based on the correlation that they are linearly changed, the judgment part judges whether the distance measuring result of the center position corresponds to or contained in the desired linear relation to be determined by the distance measuring results of the two positions of both the ends, and in the case where the distance measuring result of the center position deviates from the correlation by the predetermined value or higher, they are judged to have no reliability and are removed from the subsequent angle detection processing, and in the case where the distance measuring result of the center position remains in a range of the predetermined value from the correlation, they are judged to have reliability and are used for the subsequent angle detection processing. As a result, the angle detection apparatus with high accuracy can be achieved.

According to a twelfth aspect of the invention, there is provided an angle detection apparatus characterized by comprising a distance measuring part for obtaining distances to plural measurement positions arranged on a straight line extending on a planar body of a measurement object, a judgment part for judging existence of reliability of the distances as distance measuring results of the distance measuring part by dividing the plural measurement positions into plural small groups and on the basis of a correlation of the distance measuring results in the small groups, and an inclination angle calculation part for calculating an inclination angle between the distance measuring part and the measurement object on the basis of the distance measuring results judged to have the reliability by the judgment part.

According to such structure of the invention, when the distance measuring part measures the distances to the plural positions arranged on the straight line extending on the planar body of the measurement object, on the basis of the correlation that the measurement distances are linearly changed, the reliability of the data is judged based on whether the distances measured for the respective small groups each made of the some positions on the measurement object satisfy the correlation, and therefore, even in the case where the distance measurement to one position on the planar body of the measurement object can not be accurately performed by noise or the like or manufacture error, its influence can be reduced. Accordingly, since the distance measurement becomes accurate, the angle detection apparatus with high accuracy based on the accurate distance measurement can be achieved.

According to a thirteenth aspect of the invention, there is provided an angle detection apparatus characterized by comprising a line type distance measuring device including a pair of lenses disposed on a same plane to be spaced from each other by a base line length, a line sensor spaced from the pair of lenses by a predetermined distance, disposed to extend in a direction of the base line length, and made of a line of plural detectors on which a planar body as a distance measurement object is imaged through the pair of lenses, and an arithmetic part for calculating distances to plural different positions on the measurement object in plural different distance measuring directions on a plane including the base line length and the line sensor on the basis of output from the line sensor, and an inclination angle calculation part for using at least two arithmetic results of the distances calculated by the arithmetic part to approximate a straight line expressing a correlation of the arithmetic results, obtaining an inclination of the approximated straight line, and calculating an inclination angle of the planar body with respect to the same plane on the plane including the base line length and the line sensor on the basis of the inclination.

According to such structure of the invention, the distances to the plural positions arranged linearly on the planar body of the measurement object are measured by the line type distance measuring device, and the straight line expressing the correlation of the plural measured distances is obtained by the approximation. The inclination angle of the planar body of the measurement object is calculated from the inclination of the obtained straight line. By approximating the straight line expressing the correlation of the distance measuring results to obtain the angle, even in the case where some of the distance measurements to the plural positions on the planar body of the measurement object can not be accurately performed due to noise or the like or manufacture error, its influence can be reduced and the inclination angle can be uniquely determined. Further, since it becomes possible to measure the distances to the plural different positions on the planar body of the measurement object by providing the one line type distance measuring device, it is not necessary to increase the number of distance measuring devices in accordance with the increase of the measurement positions as in the conventional apparatus, and the structure of the angle detection apparatus can be simplified.

According to a fourteenth aspect of the invention, in the recitation of the thirteenth aspect, there is provided the angle detection apparatus characterized in that the arithmetic part calculates, as the distances, lengths of plural vertical lines drawn from the plural different positions on the measurement object in the plural different distance measuring directions onto a first straight line extended from the base line, the inclination angle calculation part further includes a coordinate position calculation part to determine plural coordinate positions on the first straight line corresponding to the plural different positions, respectively, approximates a straight line expressing a correlation among plural positions determined from pairs of the determined coordinate positions and the calculated distances corresponding to those, and calculates the inclination angle from the inclination of the straight line.

According to such structure of the invention, when the distances to the plural positions arranged on the straight line on the planar body of the measurement object are measured by the line type distance measuring device, the distances from the plural positions to the straight line extended from the base line and the coordinate positions on the straight line corresponding to the plural positions are obtained, the plural positions are obtained from the pairs of these distances and the coordinate positions corresponding to those, the straight line expressing the correlation among the plural obtained positions is approximated, and the inclination angle of the measurement object is obtained from the inclination of the straight line, and therefore, even in the case where the distance measurement to one position on the planar body of the measurement object can not be accurately performed due to noise or the like or manufacture error, its influence can be reduced.

According to a fifteenth aspect of the invention, in the recitation of the fourteenth aspect, there is provided the angle detection apparatus characterized in that the approximation of the straight line expressing the correlation is based on a least square method. According to such structure of the invention, the straight line expressing the correlation is approximated by the least square method, and the inclination angle of the measurement object is obtained from its inclination. As a result, the angle detection apparatus with high accuracy can be achieved.

According to a sixteenth aspect of the invention, there is provided an angle detection apparatus characterized by comprising a line type distance measuring device including a pair of lenses disposed on a same plane to be spaced from each other by a base line length, a line sensor spaced from the pair of lenses by a predetermined distance, disposed to extend in a direction of the base line length, and made of a line of plural detectors on which a planar body as a distance measurement object is imaged through the pair of lenses, and an arithmetic part for calculating distances to plural different positions on the measurement object in plural different distance measuring directions on a plane including the base line length and the line sensor on the basis of output from the line sensor, a typical value calculation part for obtaining typical values of positions of plural small groups including some of the plural different positions on the measurement object, respectively, from the calculated distances, and an inclination angle calculation part for using the plural typical values obtained from the typical value calculation part to approximate a straight line expressing a correlation of the typical values, obtaining an inclination of the approximated straight line, and calculating an inclination angle of the planar body with respect to the same plane on the plane including the base line length and the line sensor on the basis of the inclination.

According to such structure of the invention, dividing into the small groups including the some positions adjacent to each other on the measurement object is performed, highly reliable typical values are respectively obtained from the plural distance measuring results for the respective small groups, the straight line expressing the correlation among the plural typical values is approximated; and the inclination angle is calculated from the inclination of the straight line. As stated above, since the typical values of the highly reliable distance measuring results is used in which variation in the individual distance measuring results is made as small as possible, the angle detection apparatus with high accuracy can be achieved.

According to a seventeenth aspect of the invention, in the angle detection apparatus as recited in the sixteenth aspect, there is provided the angle detection apparatus characterized in that the arithmetic part calculates, as the distances, lengths of plural' vertical lines drawn from the plural different positions on the measurement object in the plural different distance measuring directions onto a first straight line extended from the base line length, the typical value calculation part obtains distances to the typical values of the positions of the plural small groups including some of the plural different positions on the measurement object, respectively, from the calculated distances, and the inclination angle calculation part further includes a coordinate position calculation part for determining coordinate positions on the first straight line corresponding to the typical values of the positions, approximates the straight line expressing the correlation among the plural typical values decided from pairs of the determined coordinate positions and the distances to the typical values of the positions corresponding to those, and calculates the inclination angle from the inclination of the straight line.

According to such structure of the invention, the distances are made the lengths of the vertical lines drawn from the plural positions onto the first straight line extended from the base line, the results of the measured distances are divided into the small groups, the highly reliable typical values of the distance measuring results and the coordinate positions on the first straight line corresponding to the typical values are obtained for the respective small groups, and the straight line expressing the correlation among the typical values determined from the pairs of the typical values and the coordinate positions is approximated. As a result that the highly reliable typical values are used, even in the case where the distance measuring result to one position on the planar body of the measurement object can not be accurately performed due to noise or the like or manufacture error, its influence can be reduced, and the variation of the distance measuring results is decreased, so that the straight line expressing the correlation can be obtained with high accuracy, and as a result, the angle detection apparatus with high accuracy can be achieved.

According to an eighteenth aspect of the invention, in the angle detection apparatus as recited in the seventeenth aspect, there is provided the angle detection apparatus characterized in that the approximation of the straight line expressing the correlation is performed by a least square method.

According to such structure of the invention, the straight line expressing the correlation is approximated by the least square method, and the inclination angle of the measurement object is obtained from its inclination. As a result, the angle detection apparatus with high accuracy can be achieved.

According to a nineteenth aspect of the invention, in the angle detection apparatus as recited in any one of the sixteenth to the eighteenth aspects, there is provided the angle detection apparatus characterized in that the typical value calculation part prepares the plural small groups, each including a predetermined number of the positions adjacent to each other from the plural different positions on the measurement object, by shifting the positions included in the small group one by one, and obtains the distances to the typical values of the positions for the respective small groups from distances to the positions included in the respective small groups.

According to such structure of the invention, the plural small groups each including the predetermined number of the positions adjacent to each other among the plural different positions on the measurement object are.prepared by shifting the positions included in the small group one by one, and the highly reliable typical values are calculated by the typical value calculation part from the distance measuring results for the respective small groups, and are used for the calculation of the inclination angle, so that the variation in the respective distance measuring results due to manufacture error, noise or the like is decreased, and the number of the obtained typical values having relatively high reliability can be increased, and therefore, the approximation of the straight line expressing the correlation of these can be accurately performed, and the angle detection apparatus with high accuracy can be achieved by detecting the inclination of the straight line.

According to a twentieth aspect of the invention, there is provided an angle detection apparatus characterized by comprising a distance measuring device for measuring distances to plural mutually different measurement points arranged substantially linearly on a measurement object of a planar body, and an inclination angle calculation part for approximating a straight line expressing a correlation between at least two measured distances, obtaining an inclination of the approximated straight line, and calculating an inclination angle of the measurement object with respect to the distance measuring device.

According to such structure of the invention, the distances to the plural positions arranged linearly on the planar body of the measurement object are measured, and the straight line expressing the correlation of the measured distances is obtained by the approximation. The inclination angle of the planar body of the measurement object is calculated from the inclination of the obtained straight line. By obtaining the straight line expressing the correlation of the distance measuring results by the approximation, even in the case where the distance measurement to the position on the planar body of the measurement object can not be accurately performed, its influence can be reduced. Thus, the angle detection apparatus with high accuracy can be achieved.

According to a twenty-first aspect of the invention, there is provided an angle detection apparatus characterized by comprising a distance measuring device for measuring distances to plural mutually different measurement points arranged substantially linearly on a measurement object of a planar body, a typical distance value determination part for obtaining at least two typical distance measuring values on the basis of the plural measured distances, and an inclination angle calculation part for approximating a straight line expressing a correlation between the at least two typical distance measuring values, obtaining an inclination of the approximated straight line, and calculating an inclination angle of the measurement object with respect to the distance measuring device on the basis of the inclination.

According to such structure of the invention, the distances to the plural positions linearly arranged on the planar body of the measurement object are measured, the at least two typical values are obtained from the plural measured distances, and the straight line expressing the correlation of the at least two typical values is obtained by the approximation. The inclination angle of the planar body of the measurement object is calculated from the inclination of the obtained straight line. By obtaining the straight line expressing the correlation of the typical values of the distance measuring results by the approximation, even in the case where the distance measurement to the position on the planar body of the measurement object can not be accurately performed due to noise or the like or manufacture error, its influence can be reduced. Thus, the angle detection apparatus with high accuracy can be achieved.

According to a twenty-second aspect of the invention, in the recitation of any one of the first to the twenty-first aspects, there is provided the angle detection apparatus characterized in that the measurement object is a screen on which an image is projected.

According to such structure of the invention, since the measurement object is the screen on which the image is projected, it can be used for correcting a distortion of the image on the screen by detecting the inclination angle of the screen.

According to a twenty-third aspect of the invention, there is provided a projector for projecting an image on a screen, the projector being characterized by including an angle detection apparatus as recited in the twenty-second aspect, and an image distortion correction part for correcting a distortion of the image on the screen on the basis of an inclination angle calculated by the angle detection apparatus.

According to such structure of the invention, the distortion of the image due to a relative inclination angle between the projector and the screen can be corrected automatically and accurately by the simple structure.

According to a twenty-fourth aspect of the invention, there is provided an angle detection method characterized by comprising a distance measuring steps of obtaining distances to plural measurement positions arranged on a straight line extending on a planar body of a measurement object, typical value calculation steps of forming plural small groups including some of the positions spatially adjacent to each other from the plural positions and calculating a typical value of the distances obtained by the distance measuring steps for each of the small groups, and inclination angle calculation steps of calculating an inclination angle of the planar body on the basis of the typical value.

BRIEF DESCRIPTION OF THE DRAWINGS

Fig. 1 is a schematic block diagram showing a structure of a projector including an angle detector according to a first embodiment of the invention.

Fig. 2 is a schematic front view of the projector shown in Fig. 1.

Fig. 3 is functional block diagram of the angle detector according to the first embodiment of the invention.

Figs. 4A and 4B are views for explaining a distance measuring operation of a distance measuring device included in the angle detector according to the first embodiment of the invention.

Figs. 5A and 5B are different views for explaining the distance measuring operation of the distance measuring device included in the angle detector according to the first embodiment of the invention.

Fig. 6 is a block diagram showing the outline of a pair of line sensors of the distance measuring device included in the angle detector according to the first embodiment of the invention.

Fig. 7 is a different view for explaining distance measurement of plural positions by the distance measuring device included in the angle detector according to the first embodiment of the invention.

Fig. 8 is a view for explaining an angle detection method by the distance measuring device included in'the angle detector according to the first embodiment of the invention.

Fig. 9 is a different view for explaining the angle detection method by the distance measuring device included in the angle detector according to the first embodiment of the invention.

Fig. 10 is a different view for explaining the angle detection method by the distance measuring device included in the angle detector according to the first embodiment of the invention.

Fig. 11 is a different view for explaining the angle detection method by the distance measuring device included in the angle detector according to the first embodiment of the invention.

Fig. 12 is a different view for explaining a method for obtaining a contrast centroid position of a distance measuring arithmetic area of the distance measuring device included in the angle detector according to the first embodiment of the invention.

Fig. 13 is a different view for explaining the angle detection method by the distance measuring device included in the angle detector according to the first embodiment of the invention.

Fig. 14 is a different view for explaining the angle detection method on the basis of distance measuring results of plural positions by the distance measuring device included in the angle detector according to the first embodiment of the invention.

Fig. 15A is a view of a graph for explaining distance measuring results of plural positions by the distance measuring device included in the angle detector according to the first embodiment of the invention, and Fig. 15B is a view of a graph for explaining a state of those distance measuring results after an averaging processing of the invention, in which the vertical axis indicates a measurement distance and the horizontal axis indicates a position on a line sensor.

Fig. 16 is a schematic view showing a structure of a distance measuring arithmetic area of a line sensor of the distance measuring device included in the angle detector according to the first embodiment of the invention.

Fig. 17 is a flowchart showing the operation of the angle detector according to the first embodiment of the invention.

Fig. 18 is a flowchart showing the averaging processing of the angle detector according to the first embodiment of the invention.

Fig. 19A is a graph showing distance measuring results corresponding to positions in seven distance measuring directions measured by a distance measuring device included in an angle detector according to a second embodiment of the invention, in which the vertical axis indicates a measured distance and the horizontal axis indicates a pixel position on a line sensor, and Fig. 19B is a table showing results (CONF(FLG2)) obtained by performing a reliability judgment of the invention as to the distance measuring results.

Fig. 20 is a flowchart showing the operation of a mutual reliability judgment of the angle detector according to the second embodiment of the invention.

Fig. 21 is a functional block diagram of an angle detector according to a third embodiment of the invention.

Fig. 22A is a graph showing distance measuring results of plural positions by a distance measuring device included in the angle detector according to the third embodiment of the invention and angle calculation results on the basis of those, and Fig. 22B is a graph for explaining a method of approximating a straight line expressing a correlation (distribution) of those distance measuring results by the least square method according to the invention.

Fig. 23 is a flowchart showing the operation of the angle detector according to the third embodiment of the invention.

Fig. 24 is a flowchart showing the operation of a mutual reliability judgment of measurement values, an averaging processing and an x-axis conversion processing according to the third embodiment of the invention.

Fig. 25 is a view showing a method of the x-axis conversion to obtain an x-coordinate value Xbalance(N) from a contrast centroid position Balance (N) according to the third embodiment of the invention.

Fig. 26 is a flowchart showing the operation of performing a straight line approximation and angle detection by the least square method according to the third embodiment of the invention.

DETAILED DESCRIPTION OF THE INVENTION

Hereinafter, a first embodiment of the invention will be described in detail with reference to attached drawings.

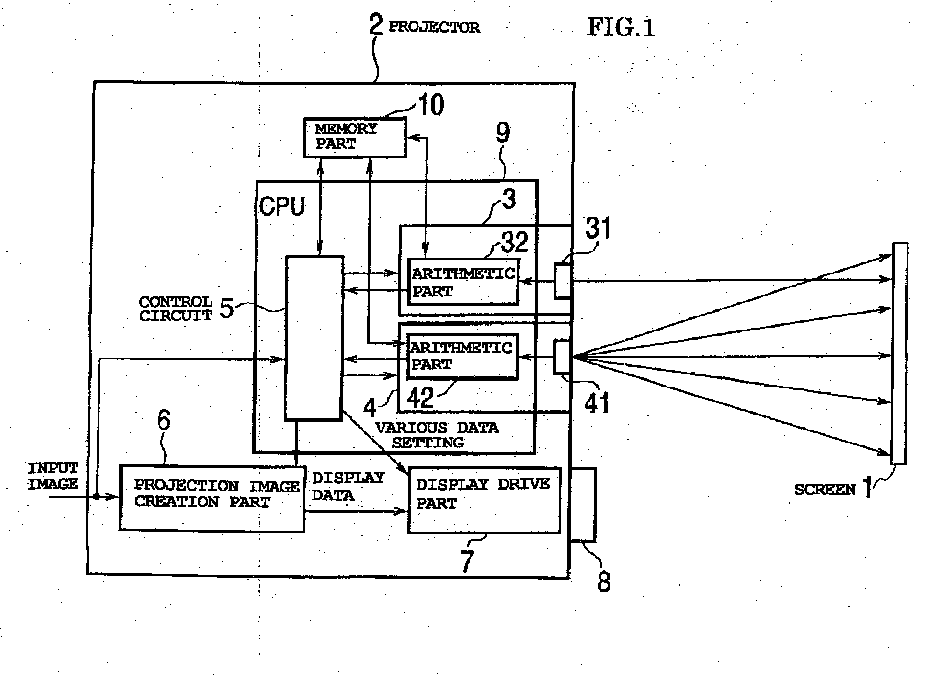

Fig. 1 is a schematic block diagram of a projector 2 which includes an angle detection apparatus according to this embodiment and electrically corrects a trapezoidal distortion of an image projected on a screen 1 on the basis of a detected inclination angle of the screen 1. In order to detect an inclination angle of the projector 2 with respect to the screen 1 in the horizontal plane and the vertical plane, the angle detection apparatus of the embodiment includes a first line type passive distance measuring device 3 and a second line type passive distance measuring device 4 for measuring distances from the projector 2 to plural positions arranged on the plane of the screen 1 in the horizontal direction and the vertical direction. The passive distance measuring device itself does not emit light or does not transmit, but receives an image projected on the screen 1 and measures a distance. The line type distance measuring device includes a line sensor in which plural photodetector cells are linearly arranged.

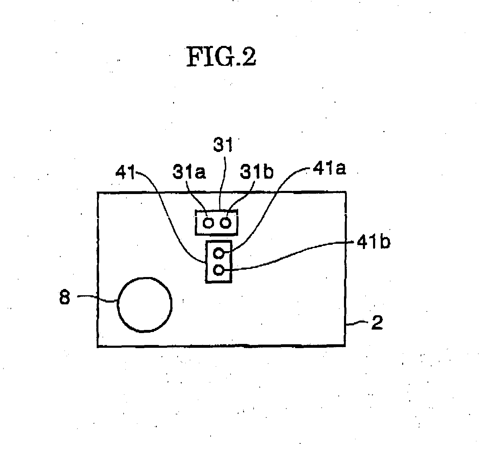

Fig. 2 is a plan view showing the front of the projector 2 shown in Fig. 1. Incidentally, the angle detection apparatus of this embodiment is not limited to one provided in the projector, and is not limited to one for detecting an inclination angle with respect to the screen, but can be generally applied to detection of a relative inclination angle with respect to a planar body. The projector 2 is an example of uses in which the angle detection apparatus of the invention is employed.

As shown in Fig. 2, the first line type passive distance measuring device 3 of Fig. 1 includes an image pickup part 31 provided with a pair of lenses 31a and 31b disposed on a plane forming the front of the projector 2 and spaced from each other by a first base line length k (not shown) extending in the horizontal direction. Similarly, the second line type passive distance measuring device 4 includes an image pickup part 41 provided with a pair of lenses 41a and 41b disposed on the same plane forming the front of the projector 2 and spaced from each other by a second base line length k' (not shown) extending in the vertical direction orthogonal to the horizontal direction of the image pickup part 31. As shown in Fig. 2, a lens (which may include a condensing lens and the like) 8 of a projection optical system is provided on the same plane forming the front of the projector 2, and irradiates light for projecting an image on the screen 1.

Reference is made to Fig. 1 again. If the optical axis of light irradiated from the projection lens 8 to the screen 1 has a vertical positional relation with respect to the plane of the screen 1, the upper and lower portions (or left and right portions) of the screen 1 are equal to each other in distance from the projection lens 8, and the trapezoidal distortion does not occur in an image on the screen 1. However, actually, as described above, when the projector 2 performs irradiation from a forward place of the screen 1, it is placed to be shifted downward or upward from the center of the screen in order not to disturb a viewer, so that the projection optical axis of light irradiated from the projection lens 8 of the projector 2 to the screen 1 is inclined from the vertical positional relation with respect to the plane of the screen 1.

Thus, the upper and lower portions of the screen 1 are different from each other in distance from the projection lens 8, and the trapezoidal distortion occurs in the image projected on the screen 1. As described above, in order to correct this trapezoidal distortion, as disclosed in the patent document 1, it is conceivable to perform an optical correction of the inclination of the optical axis of the projection lens 8 or to perform an electrical correction in which an image processing to enlarge (contract) a portion which becomes small (large) by projection due to the trapezoidal distortion is performed by an electric circuit.

However, in order to automatically perform these corrections, first, it is necessary to automatically and correctly measure the inclination angle of the optical axis of the projection lens 8 with respect to the vertical direction of the plane of the screen, that is, the inclination angle of the plane of the screen 1 with respect to the plane forming the front of the projector 2.

The angle detection apparatus of the invention includes, as described below in detail, the first and the second line type passive distance measuring devices 3 and 4, and measures distances from the front of the projector 2 to plural positions along the horizontal direction (corresponding to the direction of the base line length of the first line type passive distance measuring device 3) and the vertical direction (corresponding to the direction of the base line length of the second line type passive distance measuring device 4) on the screen 1, so that the inclination angle of the plane of the screen 1 with respect to the plane forming the front of the projector 2 can be accurately measured in the horizontal plane and the vertical plane.

The first and the second line type passive distance measuring devices 3 and 4 include arithmetic parts 32 and 42, respectively, and output signals from the image pickup parts 31 and 41 are respectively inputted thereto. Output signals from the arithmetic parts 32 and 42 are inputted to a control circuit 5 including a structure of the invention. The control circuit 5 controls the first and the second line type passive distance measuring devices 3 and 4, and controls a projection image creation part 6 for receiving an input image from a not-shown equipment such as a personal computer and outputting image information, and a display drive part 7 for outputting an image to the projection lens 8. In accordance with the invention, the control circuit 5 calculates the relative inclination angles of the screen 1 in the horizontal direction and the vertical direction with respect to the plane forming the front of the projector 2 on the basis of the outputs from the arithmetic parts 32 and 42. Next, the control circuit 5 controls the projection image creation part 6 and/or the display drive part 7 on the basis of the calculated inclination angles so as to correct the trapezoidal distortion, and enlarges or contracts the image to be projected on the screen 1 in the up and down and/or the right and left of the screen 1. However, as described above, since the optical correction or the electrical correction itself of the trapezoidal distortion is well known (see, for example, the patent document 1), a further description will not be given. The control circuit 5 and the arithmetic parts 32 and 42 can be constructed by one microprocessor (CPU) 9.

The projector 2 includes a memory part 10 which stores data and instructions necessary for the structure of the invention, and supplies the data and instructions to the control circuit 5, the arithmetic parts 32 and 42 and the like as the need arises, or receives data from the control circuit 5, the arithmetic parts 32 and 42 and the like. The memory part 10 includes two types of memory devices, such as a nonvolatile flash memory and a volatile RAM, and instructions necessary for the invention and data used for a long period are stored in the nonvolatile memory device, and data merely temporarily used are stored in the volatile memory device.

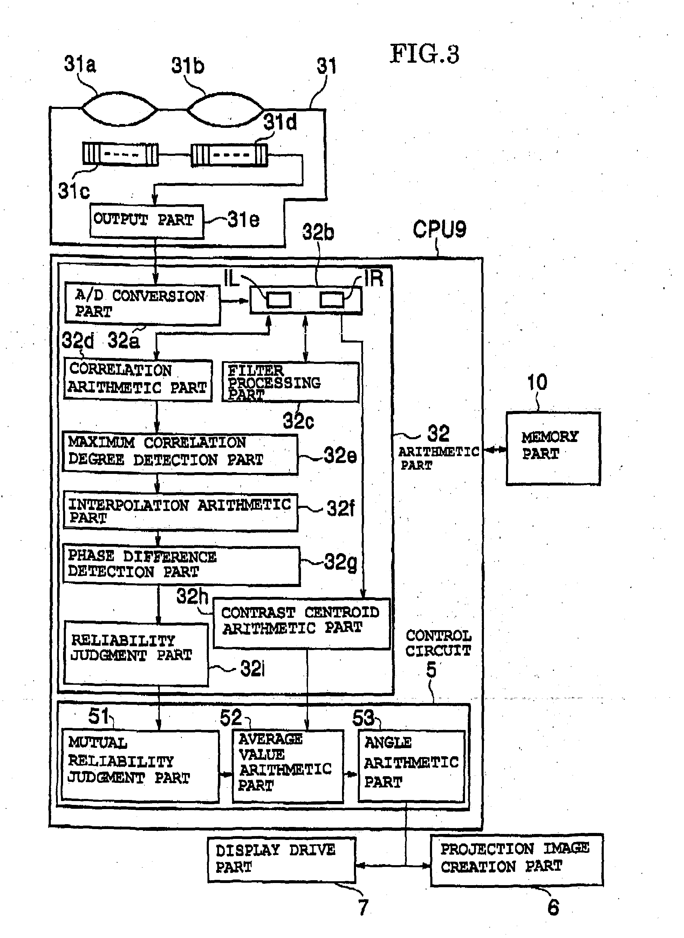

Next, with reference to Fig. 3, the structure of the projector 2 according to this embodiment will be described while using a functional block. Incidentally, in order to simplify the description, the description will be given to only the structure of the first line type passive distance measuring device 3, however, the second line type passive distance measuring device 4 is also constructed in the same way. On the plane forming the front of the projector 2 and under the pair of lenses 31a and 32b spaced from each other by the base line length k

(not shown) in the horizontal direction, line sensors 31c and 31d are spaced from these lenses 31a and 32b by a focal distance f (not shown) and are respectively disposed along the direction of the base line length k (not shown).

The line sensors 31c and 31d are a pair of line CCDs including a predetermined number of, for example, 104 optical detection elements (pixels) arranged linearly or other line type image pickup devices.

Electric signals corresponding to the light amount of an image imaged on the respective pixels of the line sensors 31c and 31d by the lenses 31a and 31b are outputted in serial through an output part 31e from the image pickup part 31.

An A/D conversion part 32a converts an analog electric signal outputted from the output part 31e of the image pickup part 31 into a digital signal. The digitized output signals from the line sensors 31c and 31d are respectively stored as picture data signal lines IL and IR into a memory area 32b for a subsequent processing.

Accordingly, the pair of the picture data signal lines IL and IR, each made of a line of 104 data, are stored in the memory area 32b. The memory area 32b may be provided in the memory part 10.

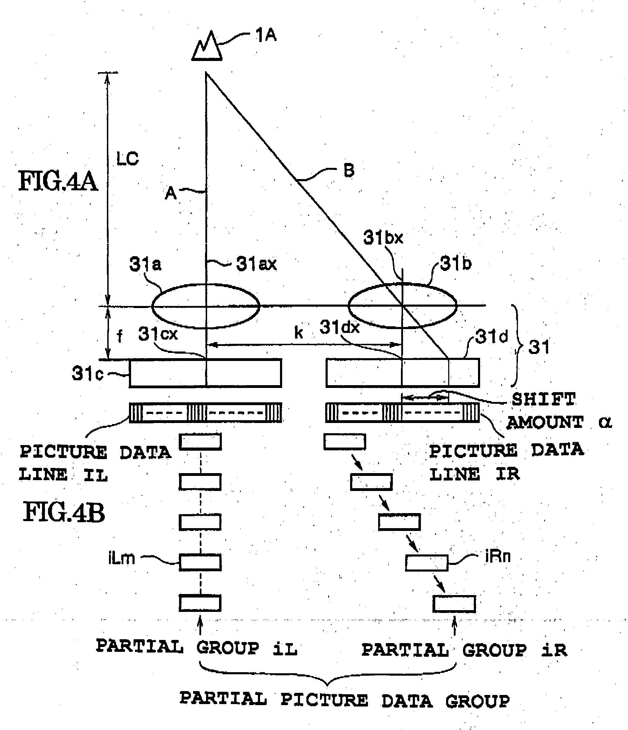

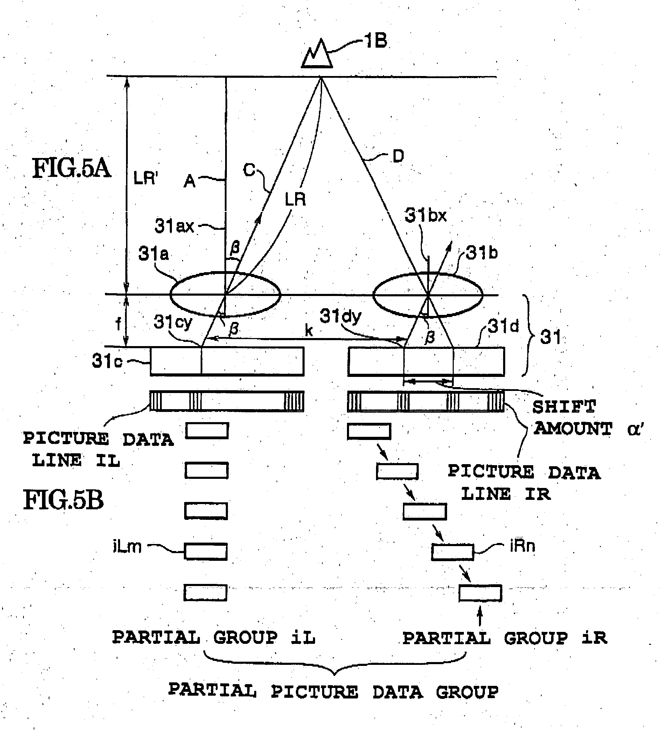

A filter processing part 32c removes (filtering) a direct current component from the line sensor output signal, and changes the picture data signal lines IL and IR to useful signals including only spatial frequency components corresponding to the image. As described later with reference to Figs. 4 and 5, a correlation arithmetic part 32d selectively extracts partial picture data groups iLm (base part) and iRn (reference part), each made of, for example, a group of 26 pixels spatially close to each other, from the picture data signal lines IL and IR, and compares both the partial picture data groups iLm and iRn with each other in order'to calculate the degree of coincidence of the data. For example, the one partial picture data group iLm is fixed as the base part, and the other partial picture data group iRn is made the reference part, and while the pixel is shifted one by one in IR, the comparison is mutually repeated. A maximum correlation degree detection part 32e detects two partial picture data groups iLm and iRn having the highest degree of consistence of data in the pair of picture data signal lines IL and IR.

An interpolation arithmetic part 32f interpolates a position interval of the partial picture data groups iLm and iRn of the highest degree of consistence obtained by the maximum correlation degree detection part 32e to a position interval more accurate than a position interval in pixel pitch units by a well-known interpolation method. On the basis of the position interval interpolated by this interpolation arithmetic part 32f, a phase difference detection part 32g calculates a relative shift amount (phase difference) of a pair of images of the same distance measuring object imaged on the pair of line sensors 31c and 31d.

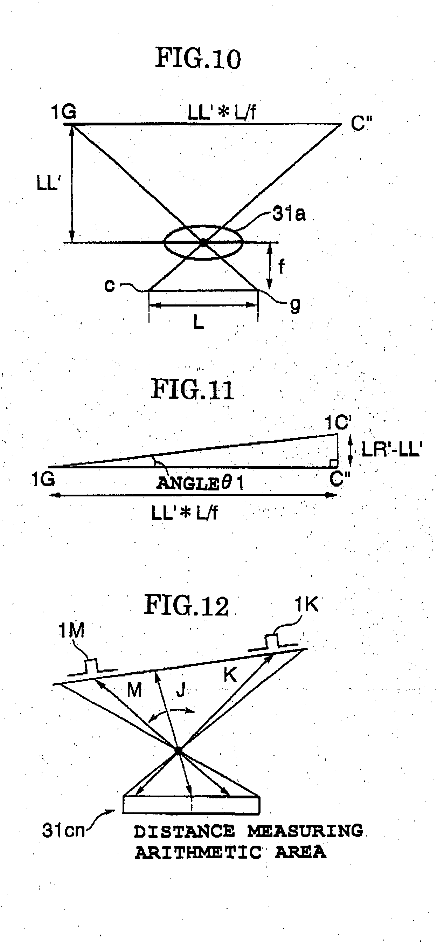

As described later with reference to Fig. 12, a contrast centroid arithmetic part 32h obtains the contrast centroid of the image imaged on the line sensors 31c and 31d. A reliability judgment part 32i judges the reliability of the calculated relative shift amount (phase difference) of the imaged positions on both the line sensors 31c and 31d. With respect to the judgment of the reliability, for example, if a body of a distance measurement object is correctly imaged on both the line sensors 31c and 31d, the degree of coincidence obtained in the maximum correlation degree detection part 32e ought to become a predetermined value or higher.

Accordingly, even if the degree of coincidence obtained in the maximum correlation degree detection part 32e is relatively highest, when the degree of coincidence is less than the predetermined value, the relviability is regarded as being low and the measurement result is excluded by the reliability judgment part 32i. When the degree of coincidence obtained in the maximum correlation degree detection part 32e is the predetermined value or higher, the data is regarded as hav i ng reliability, and CONF (FLG1 = OK is set. Since the structure of the image pickup part 31 and the arithmetic part 32 is well known and is disclosed in, for example, patent document 2 and patent document 3, a further description will be omitted.

[Patent document 2]

Japanese Patent No. 3230759

[Patent document 3]

JP-B-4-77289

The projector 2 further includes the control circuit 5 according to the embodiment of the invention, which includes, as described later in detail, a mutual reliability judgment part 51 for judging the reliability of distance measuring results of a small group of some measurement positions spatially adjacent to each other, an average value arithmetic part 52 for obtaining an average value of distance measuring results and contrast centroids concerning the small group of some measurement positions spatially adjacent to each other, and an angle arithmetic part 53 for performing an arithmetic operation to obtain an inclination angle from the distance measuring results. On the basis of the inclination angle of the screen 1 calculated in the angle arithmetic part 53, the correction amount for correcting the trapezoidal distortion is given to the projection image creation part 6 and/or the display drive part 7. By this, the trapezoidal distortion on the screen 1 is corrected. Incidentally, the memory part 10 is connected to a microprocessor (CPU) 9, and stores and supplies instruction codes and data necessary for this embodiment. Next, the operation principle (outside light triangle distance measuring system) of the line type distance measuring devices 3 and 4 will be described with reference to Figs. 4A and 4B. The first line type passive distance measuring device 3 includes the pair of lenses 31a and 31b extending in the horizontal direction on the plane forming the front of the projector 2 and spaced from each other by the base line length k, and the pair of line sensors 31c and 31d spaced from the base line length k by the focal distance f of the lenses 31a and 31b and extending in the same horizontal direction as the direction of the base line length k. The first line type passive distance measuring device 3 measures distances of plural positions on the plane of the screen 1 positioned in the plane (horizontal plane) including the base line length k and the line sensors 31c and 31d, and in the plane (horizontal plane) including the base line length k and the line sensors 31c and 31d, a relative inclination angle between the front of the projector 2 and the plane of the screen 1 is calculated.

On the other hand, the second line type passive distance measuring device 4 includes the pair of lenses 41a and 41b extending in the vertical direction on the plane forming the front of the projector 2 and spaced from each other by the base line length k' (not shown), and a pair of line sensors 41c (not shown) and 41d (not shown) spaced from the base line length k' by the focal distance f of the lenses 41a and 41b and extending in the same vertical direction as the direction of the base line length k' (not shown). The second line type passive distance measuring device 4 measures distances of Plural positions on the plane of the screen 1 positioned in the plane (vertical plane) including the base line length k' (not shown) and the line sensors 41c (not shown) and 41d (not shown), and in the plane including the base line length k' (not shown) and the line sensors 41c (not shown) and 41d (not shown), a relative inclination angle between the front of the projector 2 and the plane of the screen 1 is calculated.

For the purpose of simplifying the description, here, a description will be given to only the first line type passive distance measuring device 3, and a description concerning the second line type passive distance measuring device 4 will be omitted. However, since the operation principle is the same, the same description can also be applied to the second line type passive distance measuring device 4 by merely replacing the horizontal direction with the vertical direction.

The correspondence relation in the structure will be explained. The pair of lenses 41a and 41 b of the line type passive distance measuring device 4 correspond to the pair of lenses 31a and 31b of the line type passive distance measuring device 3, the pair of line sensors 41c (not shown) and 41d (not shown) of the line type passive distance measuring device 4 correspond to the pair of line sensors 31c and 31d of the line type passive distance measuring device 3, the image pickup part 41 of the line type passive distance measuring device 4 corresponds to the image pickup part 31 of the line type passive distance measuring device 3, the arithmetic part 42 of the line type passive distance measuring device 4 corresponds to the arithmetic part 32 of the line type passive distance measuring device 3, and the base line length k of the horizontal direction corresponds to the base line length k' of the vertical direction.

In Fig. 4A, the pair of lenses 31a and 31b are disposed to extend in the horizontal direction on the plane forming the front of the projector 2 and are spaced from each other by the predetermined base line length k. The pair of line sensors 31c and 31d respectively spaced from the pair of lenses 31a and 31b by the focal distance f thereof and extending in the direction of the base line length k (horizontal direction) are disposed under the plane forming the front of the projector 2. The line sensors 31c and 31d are disposed so that their center portions are respectively positioned substantially on optical axes 31ax and 31bx of the lenses 31a and 31b, and an image 1A at a certain position on the screen 1 as a distance measurement object is imaged on the line sensors 31c and 31d by the corresponding lenses 31a and 31b.

In Fig. 4A, the measurement position 1A on the screen 1 is imaged on the line sensors 31c and 31d via optical paths A and B of different directions and through the respective lenses 31a and 31b.

If the measurement position 1A exists at an infinite position, on the line sensors 31c and 31d spaced from the pair of lenses 31a and 31b by the focal distance f, the measurement position 1A is imaged on base positions 31cx and 31dx where the line sensors intersect with the optical axes 31ax and 31bx of the lenses 31a and 31b.

Next, the measurement position 1A approaches from the infinite position along the direction A on the optical axis 31ax of the lens 31a, and when it reaches a position of Fig. 4A, that is, the position with a distance LC, although the measurement position 1A remains imaged on the base position 31cx on the line sensor 31c, it is imaged by the lens 31b on the line sensor 31d at a position shifted by ( from the base position 31dx.

From the principle of the triangular distance measurement, the distance LC to the measurement position 1A is obtained by LC = kf/(. Here, the base line length k and the focal distance f are given values previously known, and when the shift amount ( from the base position 31dx on the line sensor 31d is detected, the distance LC can be measured. This is the operation principle of the passive type line sensor distance measuring device of the outside light triangular distance measurement. The detection of the shift amount ( and the arithmetic operation of LC = kf/( are executed in the arithmetic part 32 in Fig. 1.

That is, the detection of the shift amount ( from the base position 31dx of the line sensor 31d is performed such that the arithmetic part 32 performs a correlation arithmetic operation concerning the partial picture data groups iLm and iRn extracted from the pair of picture data signal lines IL and IR outputted from the pair of line sensors 31c and 31d. This correlation arithmetic operation is well known (see, for example, the patent document 2).

Thus, with respect to the correlation arithmetic operation, the detailed description will be omitted and a following brief description will be given. As shown in Fig. 4B, the correlation arithmetic operation is the arithmetic operation for detecting an area where when the partial picture data groups iLm and iRn are mutually overlapped with each other, the degree of coincidence becomes highest, while the overlapped partial picture data groups iLm and iRn are relatively shifted on the line sensors 31c and 31d. In Fig. 4B, the partial picture data group iLm from the one line sensor 31c is fixed to the base position 31cx and is used as a base part. The partial picture data group iRn from the other line sensor 31d is made a reference part, and the position is shifted by one pixel at a time to search the partial picture data group iRn in which the degree of coincidence with the base part is highest. The shift amount ( is an interval between a position on the line sensor 31d where the partial picture data group iRn having the highest degree of coincidence comes into existence and the base position 31dx of the line sensor 31d.

Since each of the line sensors 31c and 31d is constituted, as described later, by a line CCD in which a predetermined number of optical detector cells (pixels) are arranged on a straight line with a predetermined length, the shift amount ( can be easily obtained from the pixel position in the picture data signal line IR of the partial picture data group iRn and a pixel pitch. In this way, the distance LC to the measurement position 1A in the same direction A as the optical axis 31ax of the lens 31a can be measured by detecting the shift amount (.

Next, the principle for measuring distances LR' and LR to a measurement position 1B in a direction different from Fig. 4A will be described with reference to Figs. 5A and 5B. As shown in Fig. 5A, the measurement position 1B is imaged on the line sensors 31c and 31d via an optical path C and an optical path D in different directions and through the lens 31a and 31b.

If the measurement position 1B exists at an infinite position in the direction C in which the measurement is desired, centers of images of the measurement position 1B imaged on the pair of line sensors 31c and 31d by the pair of lenses 31a and 31b are made base positions 31cy and 31dy spaced from each other by the base line length k. Next, when the measurement position 1B at the infinite position approaches along the distance measuring direction C to a position of Fig. 5A, although the base position 31cy, on the line sensor 31c, of the image of the measurement position 1B imaged by the lens 31a is not changed, the position, on the line sensor 31d, of the image of the measurement position 1B imaged by the lens 31b is shifted from the base position 31dy by ('.

From the principle of the triangular distance measurement, the distance to the measurement position 1B becomes LR = kf/(('cos(). Incidentally, the angle ( is an inclination angle of the distance measuring direction C with respect to a vertical line to the base line length k, that is, the optical axis 31ax of the lens 31a, and is an angle decided by determining the measurement direction C.

Since the base line length k, the focal distance f and cos( are given values, when the shift amount (' is detected, the distance LR can be measured.

The distance LR' from the same plane (direction of the base line length k) forming the front of the projector 2 in which the lenses 31a and 31b are disposed to the measurement position 1B is obtained by LR' = LRcos( = kf/('. That is, when the sh i ft amount (' is detected, the distance LR' can be obtained from the base line length k and the focal distance f as the given values. That is, the angle ( is unnecessary for measuring the distance LR'.

In order to detect the shift amount (', the foregoing correlation arithmetic operation is performed. As shown in Fig. 5B, the partial picture data group iLm corresponding to the base position 31cy from the one line sensor 31c is made a base part and the position is fixed, and the partial image data group iRn from the other line sensor 31d is made a reference part, and they are mutually overlapped with each other while the position is shifted by one pixel at a time, so that the reference part iRm having data with the highest degree of coincidence with data of the base part iLm is found.

Since each of the line sensors 31c and 31d is constituted, as described later, by a line CCD in which a predetermined number of optical detector cells (pixels) are disposed on a straight line with a predetermined length, the shift amount (' can be easily obtained from the position (pixel number) in the picture data signal line IR of the partial picture data group iRn, the position (pixel number) in the picture data signal line IL of the partial picture data group iLm, and the pixel pitch.

Incidentally, in the foregoing correlation arithmetic operation, the partial picture data group iLm from the one line sensor 31c is fixed as the base part, and the partial picture data group iRn from the other line sensor 31d is made the reference part, and the position is shifted by one pixel at a time and the degree of coincidence between them is checked. However, in the case where the distance measuring direction is a direction from the center position of both the lenses 31a and 31b, the degree of coincidence between the partial picture data groups iLm and iRn may be checked while the positions of the partial picture data groups iLm and iRn are respectively moved in the opposite directions on the line sensors 31c and 31d.

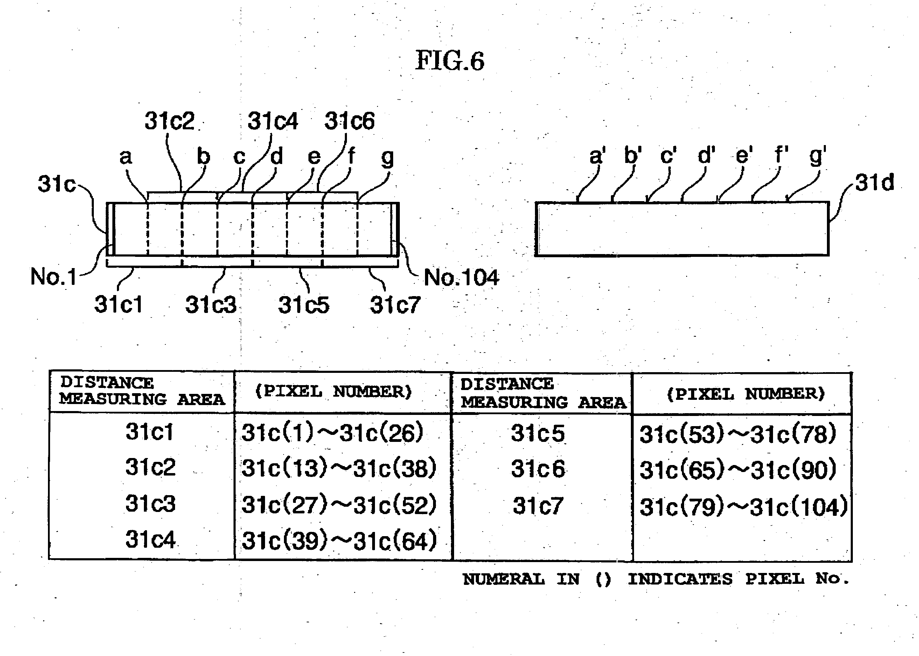

Next, the one line sensor 31c of the pair of line sensors 31c and 31d will be described in detail with reference to Fig. 6. The other line sensor 31d is constructed similarly to the line sensor 31c. As shown in Fig. 6, the line sensor 31c is constituted by a linear CCD (charge-coupled device) in which a number of, for example, 104 optical detector cells (pixels) are linearly disposed or another linear image pickup device. The 104 optical detector cells (pixels) are given pixel numbers in sequence from the left end to the right end in Fig. 6. These optical detector cells (pixels) are constituted by, in units of a group of 26 adjacent cells, seven distance measuring arithmetic areas 31c1 (1 to 26), 31c2 (13 to 38), 31 c3 (27 to 52), 31c4 (39 to 64), 31c5 (53 to 78), 31c6 (65 to 90), and 31c7 (79 to 104). Where, numerals in the brackets are optical detector cell (pixel) numbers. With respect to each of the distance measuring arithmetic areas 31c1 to 31c7, among the 26 optical detector cells, the former half are contained in.the former adjacent distance measuring arithmetic area, and the latter half are contained in the later adjacent distance measuring arithmetic area, and each of the distance measuring arithmetic areas 31c1 to 31c7 overlaps with both the adjacent distance measuring arithmetic areas by halves.

Signals from the optical detector cells (pixels) in the respective distance measuring arithmetic areas 31c1 to 31c7 correspond to the respective partial picture date groups iLm of the picture data signal line IL of the line sensor 31c in Figs. 4 and 5. Each of center positions a (13), b (26), c (38), d (52), e (64), f (78) and g(90) (where, the bracket indicates the pixel number) of the distance measuring arithmetic areas 31c1 to 31c7 becomes a base position for determining a distance measuring direction. As a result, the distance measuring device 3 using the line sensors 31c and 31d of this embodiment can measure distances to seven separate positions on the screen 1 in the same plane (horizontal plane) as the base line k. However, an actual distance measuring direction can be corrected by the contrast centroid arithmetic part 32h of Fig. 3 and by a contrast centroid position in the distance measuring arithmetic area as described later. Fig. 6 shows corresponding base positions a' , b' , c', d', e' , f' and g' in the other line sensor 31d, and they are used as reference parts at the time when a correlation arithmetic operation to the distance measuring arithmetic areas in the line sensor 31c is performed and a shift amount is obtained.

The number of the plural different positions on the screen 1 for which the distance measurement is performed according to the invention is not needed to be limited to seven, and a suitable number, for example, eleven can be adopted by suitably selecting the number of pixels or the number of distance measuring arithmetic areas of the line sensors 31c and 31d.

For example, a line CCD of 162 optical detector cells (pixels) is used, and eleven distance measuring arithmetic areas may be provided in units of a group of 27 optical detector cells (pixels). Among 27 pixels of each of the areas, 13 or 14 pixels overlap with the adjacent distance measuring arithmetic area and are used. In this example, one of the eleven positions in the base line direction (horizontal direction) on the screen 1 can be selected.

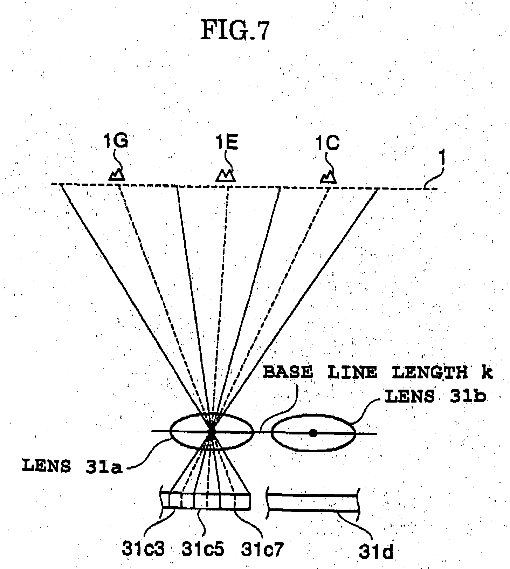

Next, a description will be given with reference to Fig. 7. Fig. 7 shows a state in which in order to perform an initial adjustment of the line type distance measuring devices 3 and 4, a mutual positional relation of the screen 1 and the projector 2 is made a predetermined positional relation. That is, the screen 1 is previously made parallel to the base line lengths k and k' so that the projection optical axis from the projector 2 becomes vertical to the screen 1, and an image suitable for the initial adjustment of the line type passive distance measuring devices 3 and 4 is projected from the projector 2. The initial adjustment is as follows. For example, the lenses 31a and 31b have aberrations. Thus, when different measurement positions in the direction of the base line length k on the screen 1 are imaged on the line sensors 31c and 31d, they are not imaged on a straight line, and the images are actually distorted. In the initial adjustment, a correction coefficient for correcting the distortion due to this lens aberration is calculated, is stored in the memory 10, and is subsequently used in the arithmetic parts 32 and 42. The line type distance measuring device 3 uses the seven distance measuring arithmetic areas 31c1 to 31c7 on the line sensor 31c, and measures distances on the screen 1 in seven distance measuring directions.

For simplification, Fig. 7 shows, among the seven directions, only positions 1C, 1E and 1G on the screen 1 in three distance measuring directions corresponding to the three distance measuring arithmetic areas 31c3, 31c5 and 31c7 on the line sensor 31c.

The line type distance measuring device 3 measures an inclination angle of the plane of the screen 1 with respect to the direction of the base line length k in the horizontal plane, and the line type distance measuring device 4 measures an inclination angle of the plane of the screen 1 with respect to the direction of the base line length K' (not shown) in the vertical plane. For simplification of description, a description will be given to only the measurement of the inclination angle of the plane of the screen 1 with respect to the direction of the base line length k in the horizontal plane by the line type distance measuring device 3. However, the description of this embodiment can also be similarly applied to the measurement of the inclination angle of the screen 1 in the vertical plane by the line type distance measuring device 4.

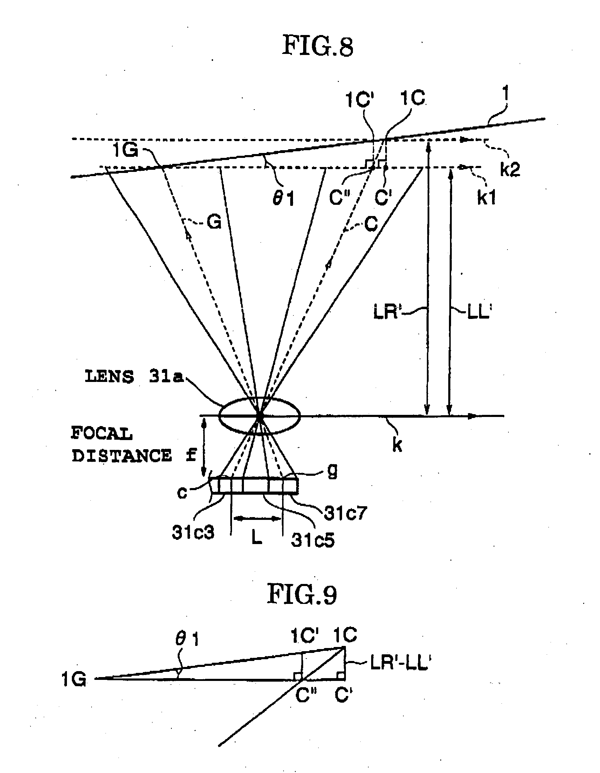

Next, with reference to Figs. 8 to 11, a description will be given to a method for measuring the inclination angle of the screen 1 by using the line type passive distance measuring device 3. For simplification of the description, two distance measuring directions C and G of the two distance measuring arithmetic areas 31c3 and 31c7 of the line sensor 31c are used, and two distances LR' and LL' to two measurement positions 1C and 1G on the plane of the screen 1 in the two distance measuring directions C and G are measured by the method explained in Fig. 5. In this embodiment, although only the two distances LR' and LL' are measured, actually, distances to seven (or eleven) measurement positions on the screen 1 in seven (or eleven) distance measuring directions are measured.

With respect to the measurement positions 1C and 1G on the screen 1, as long as an image is suitable for passive distance measurement, it may be an image including a logo mark or the like of a manufacture maker projected first on the screen 1 through the projection lens 8 when the power of the projector 2 is turned on. Besides, when an angle detection operation is periodically performed during the operation of the projector 2, the measurement positions 1C and 1G on the screen 1 may be arbitrary images projected on the screen 1.

A distance L between base positions c(38) and g(90) of the respective distance measuring directions C and G of the two distance measuring arithmetic areas 31c3 and 31c7 of the line sensor 31c is a value previously known from the pixel numbers in the brackets and the pixel pitch.

In the case where a point where a vertical line from the measurement position 1C on a straight line k2 parallel to the base line length k intersects with a straight line k1 passing through the measurement position 1G and parallel to the base line length k is made C', a distance between the measurement position 1C and the point C' is equal to LR'-LL'. In the case where an inclination angle (1 of the screen 1 is not very large, the magnitude of LR'-LL' is approximated by a distance of 1C'-C'', where a point located on the straight line k1 and spaced from the measurement position 1G by a distance (LL' (L/f) is made C'', and an intersection point of a line extending from the point C'' and orthogonal to the straight line k1 and the screen 1 is made 1C'. In general, since the relative positional relation between the screen 1 and the projector 2 is often adjusted manually, the inclination angle (1 does not become very large, and in many cases, this approximation is proper. A triangle formed of the measurement position 1G, the point C'', and the center of the lens 31a is similar to a triangle formed of the base positions c and g, and the center of the lens 31a, and the distance L between the two base positions c(38) and g(90) of the two distance measuring arithmetic areas 31c3 and 31c7 on the line sensor 31c corresponds to the distance between the measurement position 1G and the point C'', and therefore, the value of the inclination angle (1 is obtained by using the relation of the similar figures and a trigonometric function as follows:

$$(1 = \arctan\{(LR' - LL')/(LL' \ (L/f)\}$$

Accordingly, the arithmetic operation of the above expression is performed by the control circuit 5 of the projector 2, so that the inclination angle (1 between the screen 1 and the direction of the base line length k of the projector 2 in the horizontal plane can be calculated. On the basis of the magnitude of the inclination angle (1, the control circuit 1 of Fig. 1 can give an instruction for correcting the trapezoidal distortion of an image to the projection image creation part 6 and/or the display drive part 7. However, the inclination angle (1 obtained from the above expression depends on the accuracy of the distance measurement results LR' and LL' to the measurement positions 1G and 1C. The invention raises the accuracy and reliability of the distance measuring results, and enables accurate angle detection.

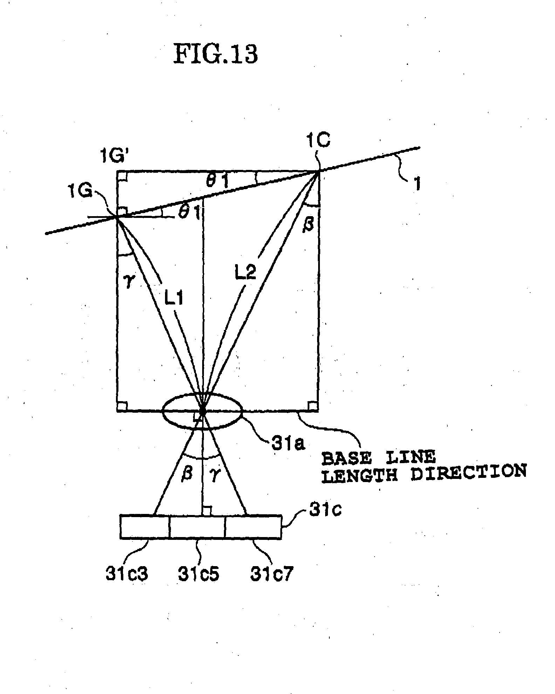

In Fig. 8, instead of the lengths of the vertical lines LR' and LL' drawn from the respective measurement positions 1C and 1G toward the base line length k, the measurement distances may be lengths from the lens 31a to the respective measurement positions 1C and 1G along the respective distance measuring directions C and G. This case will be described in Fig. 13.

If high accuracy is required for angle detection, instead of the distance L between the base values c(38) and g(90) of the two distance measuring arithmetic areas 31c3 and 31c7 used for the angle detection, a distance of a contrast centroid position in each of the distance measuring arithmetic areas 31c3 and 31c7 may be used.

With reference to Fig. 12, a description will be given to the distance measurement using the contrast centroid position by the contrast centroid arithmetic part 32h of Fig. 3. As well known, the passive distance measurement includes an operation for detecting a place where the degree of coincidence becomes highest when a pair of images imaged on two line sensors are overlapped with each other, and the degree of coincidence is obtained by detecting whether or not contrast states of the pair of pictures are coincident with each other.

Accordingly, as shown in Fig. 12, in the passive distance measurement, in the case where a design distance measuring direction of a certain distance measuring arithmetic area 31cn is a direction of an arrow J, if an image of a distance measuring object imaged on the distance measuring arithmetic area 31cn is an image in which a contrast position 1K exists only in a direction of an arrow K, an actual distance measuring direction is shifted from the direction of the arrow J to the direction of the arrow K. If an image of the distance measuring object imaged on the distance measuring arithmetic area 31cn is an image in which a contrast position 1M exists only in a direction of an arrow M, an actual distance measuring direction is shifted from the direction of the arrow J to the direction of the arrow M. Further, if an image of a distance measuring object imaged on the distance measuring arithmetic area 31cn is an image in which the contrast positions 1K and 1M exist in the direction of the arrow K and the direction of the arrow M, an actual distance measuring direction is shifted from the direction of the arrow J to a contrast centroid position of the image imaged on the measurement arithmetic area 31cn.

Accordingly, when a distance between the contrast centroid positions in the respective distance measuring arithmetic areas is used as a value corresponding to a distance between two distance measuring arithmetic areas used for the angle detection, the distance L with high accuracy can be used, and the accuracy of the angle detection is improved. Incidentally, a method for obtaining the contrast centroid position is disclosed in patent document 4 and is well known.

[Patent document 4]

JP-A-8-79585

Incidentally, a series of serial numbers (pixel numbers) are given to light receiving elements (pixels) arranged in one line of the line sensor 31c.

Next, with reference to Fig. 13, a description will be given to a calculation method of the inclination angle (1 using the line type passive distance measuring device 3 by another method. As shown in Fig. 13, the inclination angle of the screen 1 with respect to the base line length direction (horizontal direction of the projector 2) of the line type passive distance measuring device 3 is made (1, the distance to the screen 1 calculated by the method explained in Fig. 5 and by performing a distance measuring arithmetic operation along the distance measuring direction of the distance measuring arithmetic area 31c7 of the line sensor 31c is made L1, and a distance to the screen 1 calculated by performing the distance measuring arithmetic operation along the distance measuring direction of the distance measuring arithmetic area 31c3 is made L2.

An angle between a previously known distance measuring direction of the distance measuring arithmetic area 31c3 and a direction vertical to the base line length direction is made (, and an angle between a previously known distance measuring direction of the distance measuring arithmetic area 31c7 and a direction vertical to the base line length direction is made (. The inclination angle (1 is calculated by a following expression.

$$(1 = \arctan(L2\cos( - L1\cos()/(L1\sin( + L2\sin().$$

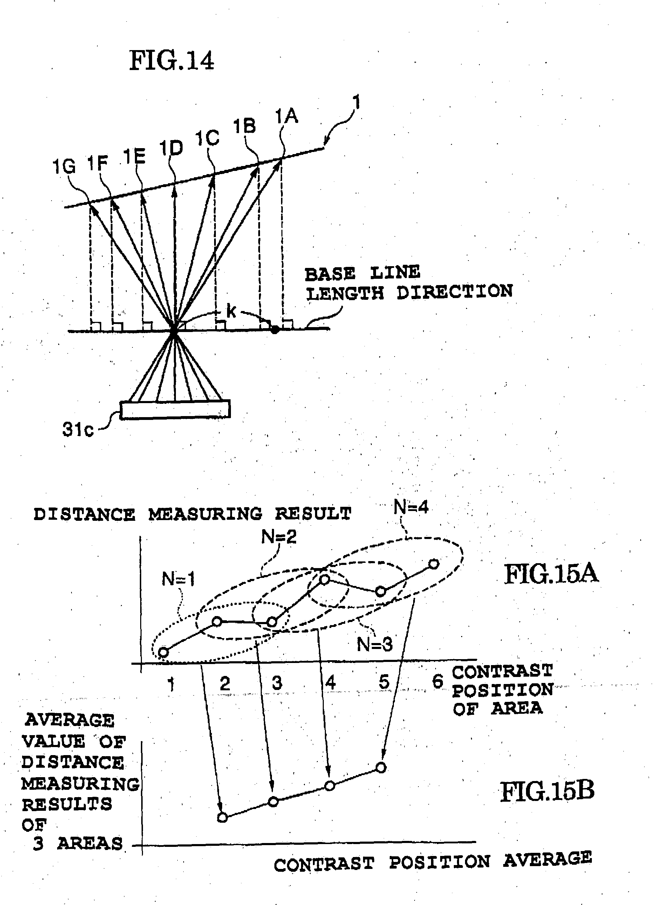

Next, a description will be given with reference to Fig. 14. The number of distance measuring directions in which distances are measured by the line type passive distance measuring device 3 according to this embodiment is, for example, seven in the case where the line sensor 31c is the line CCD including, for example, a line of 104 pixels (in the case of a line of 162 pixels, for example, eleven), and accordingly, the distances to seven positions 1A, 1B, 1C, 1D, 1E, 1F and 1G, on the screen 1, of measurement objects in the seven distance measuring directions are measured. The distances measured by the line type distance measuring device 3 of this embodiment, that is, the distance measuring results are lengths of vertical lines drawn from the seven measurement positions 1A, 1B, 1C, 1D, 1E, 1F and 1G along the direction of the base line length k (horizontal direction) on the plane of the screen 1 to the plane including the base line length k (for example, the length corresponding to LR' of Fig. 5 or LL' and LR' of Fig. 8). On the basis of the distance measuring results measured by this line type passive distance measuring device 3, the projector 2 uses the former of the two expressions for obtaining (1 and calculates the inclination angle (1 of the screen 1.

However, in the case where the line type passive distance measuring device 3 measures the lengths (for example, the distance of LR' of Fig. 5 or LL' and LR' of Fig. 8) of the vertical lines drawn from the plural measurement positions 1A, 1B, 1C, 1D, 1E, 1F and 1G toward the base line length k, even if correction is performed by various means, such as reliability judgment, to enable acquisition of accurate measurement values, as shown in Fig. 15A, the distances to the seven positions 1A, 1B, 1C, 1D, 1E, 1F and 1G on the plane of the screen 1 of the measurement object are measured as distances indicated at positions of circular dots shown when the contrast centroid positions 1, 2, 3, 4, 5 and 6 (7 is not shown) are made the horizontal axis, and the measured distance (distance measuring result) is made the vertical axis.

In the case where the distance measuring results are the lengths of the vertical lines drawn from the plural measurement positions 1A, 1B, 1C, 1D, 1E, 1F and 1G on the plane of the screen 1 toward the base line length k (in the case of LR' of Fig. 5 or LL' and LR' of Fig. 8), although they ought to be originally linearly changed, the actual distance measuring results are not linearly changed as indicated by the circular dots of Fig. 15A. Such deviation from the linear relation is due to manufacture error or noise or the like at the time of measurement.

The plural distance measuring results on the plane of the screen 1 originally have such relation that they are linearly change, and one inclination angle (1 ought to be uniquely calculated from this linear change. However, actually, from various causes such as the noise and manufacture error, even if the measured distances are connected to each other, they are not arranged linearly, and as shown in Fig. 15A, they are arranged like a line graph. Thus, it becomes difficult to uniquely calculate the accurate inclination angle (1 of the screen 1 from plural distance measuring results. In order to solve this problem, the invention uses the above principle that the distance measuring results are linearly changed, and in the case where distances to plural positions arranged linearly on the planar body of the measurement object are measured, such a typical value that an error due to distance measurement of each position becomes minimum is calculated and is used.

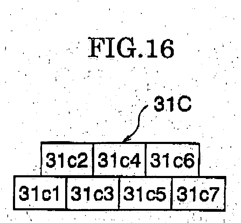

For the purpose of explaining the principle of the invention, Fig. 16 schematically shows the distance measuring arithmetic areas 31c1 to 31c7 used for measuring the distances in the line sensor 31c of the line type passive distance measuring device 3 shown in Fig. 6. The respective arithmetic areas 31c1 to 31c7 in the line sensor 31c of this embodiment are related to each other so that the half of pixels of each of the arithmetic areas are shared by adjacent arithmetic areas. For example, the area 31c1 and the area 31c2 share the half of pixels with each other, and the area 31c2 and the area 31c3 share the half of pixels with each other. Fig. 16 is a schematic view showing the overlapping relation of the pixels among the distance measuring arithmetic areas 31c1 to 31c7 in the line sensor 31c of Fig. 6 used in the embodiment, in which overlapping portions are disposed at the upper side.

In the case where plural positions linearly arranged on the plane such as the screen 1 are measured by the line sensor 31c including the distance measuring arithmetic areas 31c1 to 31c7 as shown in

Fig. 16, the relation among three distances of a distance measured by the area 31c1, a distance measured by the area 31c2, and a distance measured by the area 31c3 is such that an average value of the distances measured by the area 31c1 and the area 31c3 becomes equal to the distance measured by the area 31c2. This is because the measurement object is the planar body, and accordingly, distance measuring results to the positions arranged linearly thereon have a linear relation. That is, the distance measuring results have a correlation. This correlation is caused since the measurement object is the planar body. In general, in the case where distances of plural positions along a certain straight line on the planar body such as the screen 1 are measured by an Nth distance measuring ar i thmet i c area, an (N+1)th distance measuring arithmetic area, and an (N+2)th distance measuring arithmetic area of the line sensor like this, an average value S of the measurement distance by the Nth area and the measurement distance by the (N+2)th area ought to become substantially equal to the measurement distance T by the (N+1)th intermediate area. In the invention, the above principle is used, and from the distance measuring results of plural adjacent distance measuring arithmetic areas, in the case where the distance measuring result T of the intermediate distance measuring arithmetic area deviates from the average value S of both adjacent distance measuring arithmetic areas by a predetermined judgment value or higher ((T - S( ( judgment value or (T/S - 1 ( ( judgment value), it is judged that the distance measuring results of the distance measuring arithmetic areas have no reliability, and they are removed from a subsequent arithmetic processing. Incidentally, the magnitude of the judgment value can be suitably selected according to purpose. A method for calculating a typical value according to the invention is as follows:

(1) An average of centroid positions of contrast distributions of the N. N+1 and N+2 areas is detected by an averaging processing to contrast centroid positions of the respective areas.

(2) An average of distance measuring results of the N, N+1 and N+2 areas is detected by an averaging processing to distance measuring results of the respective areas. As shown in Fig. 15B, when the two averaging processings (1) and (2) are performed concerning four small groups each including three distance measuring arithmetic areas N, N+1 and N+2 (N is a natural number of 1 to 4 in Fig. 15A), a graph is produced in which the vertical axis indicates the average value of the distance measuring results for each of the small groups, and the horizontal axis indicates the average position of the centroids of the contrast distributions for each of the small groups. As is easily understood from the comparison between Fig. 15A and Fig. 15B, the graph according to the avereged value is arranged substantially linearly.

Accordingly, when the inclination angle (1 of the screen 1 is calculated from the inclination of the graph showing the linear relation connecting the averaged values of Fig. 15B, the angle with higher accuracy can be detected.

For example, from four averaged distance measuring results shown in Fig. 15B, the distance measuring results of two adjacent ones are used, and when the inclination angle (1 is obtained from the foregoing expression, three inclination angles (1 can be obtained. Among the three inclination angles, the inclination angle with the magnitude of the center value except the maximum value and the minimum value, or the average value of those can be made the detected inclination angle (1. In this way, the angle with higher accuracy can be detected.

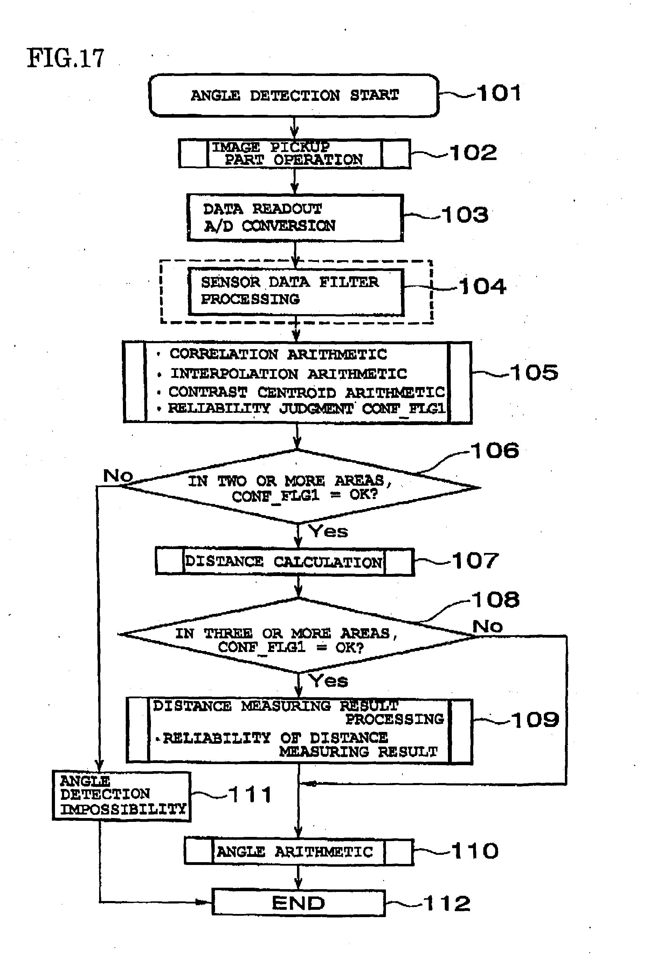

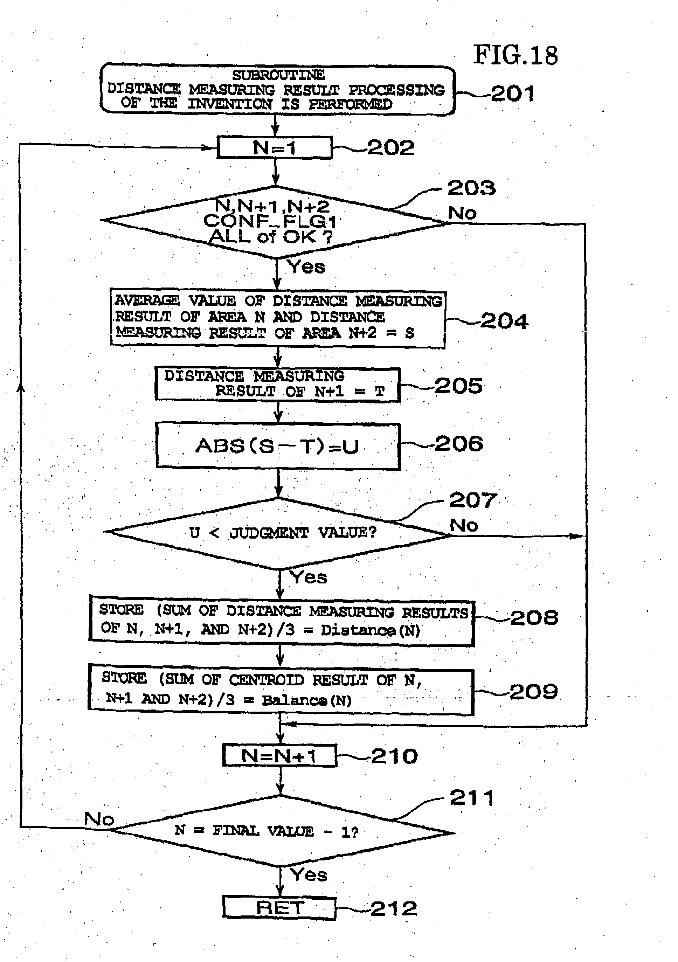

Incidentally, in the case where the projection optical system 8 of the projector 2 has an autofocus mechanism, automatically detects a distance to the screen 1, and performs autofocus of an image projected on the screen 1, the center value except the maximum value and the minimum value among the average values of the distance measuring results shown in Fig. 15B or the average value of those can be selected as the distance to the screen 1. Alternatively, in the case where the distance measuring result of the center distance measuring arithmetic area 31c4 of the line sensor 31c has a linear relation to the distance measuring results of both the adjacent distance measuring arithmetic areas, it may be used. In this way, the distance with higher accuracy can be detected. Next, the operation of the angle detector of the invention will be described with reference to flowcharts shown in Figs. 17 and 18. First, a description will be made with reference to Fig. 17 as well as Fig. 1. When the power is turned on to the projector 2, or when a periodic angle detection operation is started during the operation of the projector 2, the control circuit 5 judges whether or not input image data is inputted from a not-shown outside personal computer or the like, and when there exists the input image data from the outside, the control circuit causes the projection image creation part 6 to output display data corresponding to the image data, and the image is projected on the screen 1 through the display drive part 7 and the projection optical system 8. If there exists no input image data, the control circuit 5 outputs contrast image data for adjustment (for example, suitable image data including a logo mark or the like) previously stored in the projector 2 to the projection image creation part 6, and the image is projected on the screen 1 through the display drive part 7 and the projection optical system 8 (block 101).

The above operation is the operation for detecting the angle by using the image projected by the original image projection function of the projector 2, and as stated above, the line type passive distance measuring devices 3 and 4 do not need a light projection part dedicated for the projection of the contrast image for adjustment.

Subsequently, the control circuit 5 causes the image pickup parts 31 and 41 of the line type passive distance measuring devices 3 and 4 to operate (102), so that the distances to plural positions in the horizontal plane and the vertical plane on the screen 1 are measured, and the inclination angles of the screen 1 with respect to the projector 2 in the horizontal plane and the vertical plane are detected. Incidentally, as described above, the angle detection operation start (101) is not limited to the time of the turning-on of the power to the projector 2, and can be performed at any time during the operation of the projector 2. At this time, any image projected on the screen 1 can be used for distance measurement to perform angle detection. The image pickup parts 31 and 41 are operated, and data is read out from the line sensors and is A/D converted (32a in Fig. 3) (103). A filter (32c in Fig. 3) processing for removing a direct current component from the sensor data of the line sensors is performed (104), and then, a correlation arithmetic operation (32d and 32e in Fig. 3), an interpolation arithmetic operation (32f in Fig. 3), a contrast centroid arithmetic operation (32h in Fig. 3), and a reliability judgment (judgment by the normal reliability judgment part 32i in Fig. 3 as to whether the degree of coincidence obtained in the maximum correlation degree detection part 32e is a predetermined value or higher) are performed with respect to the respective distance measuring arithmetic areas 31c1 to 31c7, and when they pass the reliability judgment, CONF(FLG1 = OK is set (105). If two or more distance measuring arithmetic areas do not pass the data reliability judgment (CONF(FLG1 = OK) (106), since subsequent angle detection is impossible (111), the operation is ended (112).

When two or more distance measuring arithmetic areas pass the data reliability (106), the distances are calculated by the method explained with reference to Fig. 5 (107). When the distances are calculated, a well-known correction such as a lens aberration correction or a temperature correction is performed. Then, it is checked whether three or more distance measuring arithmetic areas pass the data reliability judgment (CONF(FLG1 = OK) (108). If three or more distance measuring arithmetic areas do not pass the data reliability judgment (CONF(FLG1 = OK) (108), since the averaging processing methods (1) and (2) of the invention and the mutual reliability judgment can not be used, the former of the conventional two foregoing expressions for obtaining the inclination angle (1 is used to perform the angle arithmetic operation (110), and it is ended (112). The angle arithmetic operation is processed by the angle arithmetic part 53 in Fig. 3.

If three or more distance measuring arithmetic areas pass the data reliability judgment (CONF(FLG1 = OK) (108), the averaging processing methods (1) and (2) of the invention by a subroutine processing of Fig. 18 and the mutual reliability judgment are applied (109). The distance measurement results after the averaging processing methods (1) and (2) of the invention executed in the subroutine processing of Fig. 18 and the mutual reliability judgment are applied (109) are used, and in order to obtain the inclination angle (1, the former of the two foregoing expressions is used to perform the angle arithmetic operat i on (110), and it is ended (112). in this way, the detected inclination angle (1 is supplied by the control part 5 to the display drive part 7 or the projection image creation part 6, and the foregoing electrical or optical correction operation is performed in order to correct the trapezoidal distortion of the image on the screen 1.

Fig. 18 is a flowchart showing subroutines for performing the averaging processing methods (1) and (2) of the invention and the mutual reliability judgment, which are executed at the block 109 in Fig. 17. These subroutines are executed in the mutual reliability judgment part 51 and the average value arithmetic part 52 shown in Fig. 3.

When entering into the block 109 of Fig. 17 is performed, the subroutine distance measuring result processing of Fig. 18 is started (block 201), and N = 1 is set (202). Then, it is checked whether the data reliabilities (CONF(FLG1 = OK) of all the distance measuring arithmetic areas N, N+1, N+2 are successful (203). If the data reliabilities (CONF(FLG1 = OK) of the three consecutive distance measuring arithmetic areas are not successful, 1 is added to N (210), and when N after the addition is a value obtained by subtracting 1 from the final value (7 in this embodiment), returning to the block 110 of Fig. 17 is performed. If N after the addition is not the value obtained by subtracting 1 from the final value (211), returning to the block 203 is performed. If the data reliabilities (CONF(FLG1 = OK) of the three consecutive distance measuring arithmetic area are successful (203), the average value S of the distance measuring result of the area N and the distance measuring result of the area N+2 is obtained (204). Then, the distance measuring result of the area N+1 is made T (205), and the absolute value U of a difference between S and T is obtained (206).

If the absolute value U of the difference is the predetermined judgment value or higher (207), it is judged that the measurement data of the three adjacent areas have no reliability, and proceeding to block 210 is performed. If the absolute value U of the difference is less than the predetermined judgment value, it is judged that the measurement data of the three adjacent areas have reliability (207), the averaging processing method (2) of the invention is applied, and the average value of the distance measuring results of the adjacent distance measuring arithmetic areas is obtained and stored. That is, (the total of distance measuring results of N, N+1, N+2)/3 = Distance(N) is obtained and stored, and is used for the angle arithmetic operation in the block 110 of Fig. 17.

Next, the averaging processing method (1) of the invention is applied, and the average value of the contrast distribution centroids by adjacent distance measuring arithmetic areas is obtained and stored. That is, (the total of contrast centroid results of N, N+1, N+2)/3 = Balance(N) is obtained and stored, and is similarly used for the angle arithmetic operation at the block 110 of Fig. 17. Thereafter, proceeding to block 210 is performed and 1 is added to N. Then, when N is equal to the number obtained by subtracting 1 from the final value (211), returning to the flowchart of Fig. 17 is performed (212), and the average value obtained by the averaging processings (1) and (2), the Distance(N) and the Balance(N) are used, and the angle arithmetic operation of the inclination angle (1 is performed by using the foregoing expression (110). In the case where there are plural such inclination angles (1 obtained by the calculation in this way, the center value except the maximum value and the minimum value among them, or the average value of them is made the inclination angle (1. In this way, the angle detection with high accuracy can be performed.

As shown in the flowchart of Fig. 18, in the angle detection apparatus of the invention, with respect to the distance measuring results in which the line sensor is used to measure the distances of the three adjacent positions arranged linearly on the planar body of the measurement object, the distance measuring result of the intermediate position ought to become substantially equal to the average value of the distance measuring results of positions of both ends, and therefore, if the distance measuring result of the intermediate position deviates from the average value of the distance measuring results of both the ends by the predetermined value or higher, it is judged that the distance measuring results have no linearity, and the distance measuring results have no reliability, and they are not used for the subsequent processing. If a difference between the distance measuring result of the intermediate position and the average value of the distance measuring results of both the ends is less than the predetermined value, it is judged that the distance measuring results have linearity and accordingly have reliability, and they are used for the subsequent processing.

In the angle detection apparatus of the invention, from the measurement results of the distances of the plural positions linearly arranged on the planar body of the measurement object obtained by using the line sensor, the plural small groups each made of the three adjacent positions are prepared, and the average value of the distance measuring results and the average value of the centroid positions of the contrast distributions are obtained for each of the small groups. Then, on the basis of these average values, the angle arithmetic operation is performed, and the rotative inclination angle of the planar body of the measurement object is detected.

The measurement distances used for the method for comparing the average value of the two distance measuring arithmetic areas with the value of the intermediate distance measuring arithmetic area for the averaging processings (1) and (2) and the mutual reliability judgment according to the foregoing embodiment, that is, the distance measuring results are lengths of the vertical lines (for example, LR' of Fig. 5, or LL' and LR' of Fig. 8) drawn toward the base line length k from the plural measurement positions 1A to 1G of the planar body 1 of the measurement object along the direction of the base line length k. However, also when distances (for example, LR of Fig. 5 or L1 and L2 of Fig. 13) to the plural measurement positions 1A to 1G along the distance measuring directions A to G from the lens 31a are used, the principle of this embodiment can be applied. The plural distance measuring results of the latter do not have the linear relation of the former, but have a trigonometric relation. Accordingly, the reliability judgment and the averaging processing would be performed using trigonometric functions.

Besides, in Fig. 18, in the case where the judgment is Yes at the step 203, the step 204 to 207 are omitted, and proceeding to the step 208 may be directly performed. In this case, shortening of the processing time by omitting the steps 204 to 207 can be realized.

Next, a second embodiment of the invention will be described with reference to the attached drawings. Incidentally, the same structures as the first embodiment are denoted by the same numbers, and the explanation will be omitted.

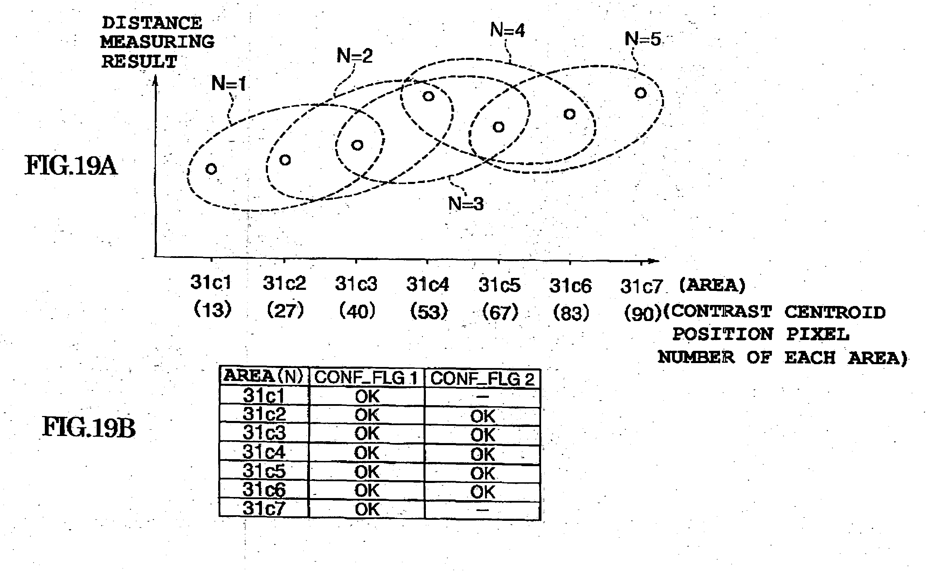

As described in the first embodiment, plural distance measuring results on the plane of the screen 1 are originally related to each other so that they are substantially linearly changed, and one inclination angle (1 ought to be uniquely calculated from this linear change. However, actually, due to various causes such as noise or manufacture error, distance measuring results deviating from the linear relation are produced as shown in Fig. 19A. Thus, it becomes difficult to uniquely calculate the accurate inclination angle (1 of the screen 1 from the plural distance measuring results.

In order to solve this problem, this embodiment uses the above principle that the distance measuring results are linearly changed, and in the case where distances to plural positions linearly arranged on the planar body of the measurement object are measured, distance measuring results deviating from the linear relation are removed since there is no reliability of data, and only distance measuring results having the linear relation are used to perform angle detection with high accuracy.

Further, in this embodiment, from the distance measuring results of plural adjacent distance measuring arithmetic areas, in the case where the distance measuring result T of the intermediate distance measuring arithmetic area deviates from the average value S of both adjacent distance measuring arithmetic areas by a predetermined judgment value or higher, it is judged that the distance measuring results of the distance measuring arithmetic areas have no reliability, and they are removed from the subsequent arithmetic processing. That is, by the following (1) or (2), the reliability based on the correlation of distance measuring results is judged.

(1) At the time of (T - S( < judgment value, there is reliability, and at the time of (T - S( ( judgment value, there is no reliability. Alternatively,
(2) at the time of (T/S - 1( < judgment value, there is reliability, and at the time of (T/S - 1( ( judgment value, there is no reliability. Where, the magnitude of the judgment value is suitably selected according to the circumstances.

As shown in Fig. 19A, the reliability judgment based on the above correlation (1) or (2) is performed for each of five small groups each including three distance measuring arithmetic areas of N, N+1 and N+2 (in Fig. 19A, N is a natural number of 1 to 5). Then, it turns out that the value of the distance measuring result of the distance measuring arithmetic area 31c4 has no linear relation to the distance measuring results of both the adjacent distance measuring arithmetic areas 31c3 and 31c5. The existence of the linear relation can be easily judged when the average value of distance measuring results of both ends of the small groups is compared with the center distance measuring result. That is, when the distance measuring results in the small groups have the linear relation, a difference between the average value S of the distance measuring results of both the ends and the center distance measuring result T ought to be within a predetermined range. Table of Fig. 19B shows an example in which in this way, for each of the small groups, in the case where the difference between the average value S of the distance measuring results of both ends and the center distance measuring result T is within the predetermined range, CONF(FIG2 = OK is set, and in the case where it is outside of the predetermined range, CONF(FIG2 = NG is set. When the distance measuring result for which CONF(FIG2 = NG is set is excluded from the subsequent angle detection processing, the angle detection with higher accuracy can be performed.

In Fig. 19B, unless the number of distance measuring results for which CONF(FIG2 = OK is set is two or more, the above angle detection can not be performed, and therefore, in the case where the number of distance measuring results for which CONF(FIG2 = OK is set is one or less, when the number of distance measuring results for which CONF(FIG1 = OK is two or more, the angle detection is performed by using the distance measuring results for which CONF(FIG1 = OK is set.

Further, when the averaged value of the distance measuring results for each of the small groups is used, the angle detection with higher accuracy can be performed. For example, from five distance measuring results of CONF(FLG1 = OK and CONF(FLG2 = OK shown in Fig. 19B, the averaged value of each of two small groups of three adjacent distance measuring arithmetic areas 31c2, 31c3 and 31c4, and 31c3, 31c4 and 31c5 is used, and the inclination angle (1 is obtained from the foregoing expression. If plural inclination angles (1 are obtained, the center value except the maximum value and the minimum value or the average value of them is made the inclination angle (1, and the inclination angle can be determined.

Incidentally, in the case where the projection optical system 8 of the projector 2 has an autofocus mechanism, automatically detects the distance to the screen 1, and performs autofocus of an image projected on the screen 1, the center value except the maximum value and the minimum value in four distance measuring results of CONF (FLG2 = OK shown in Fig. 19B or the average value of them can be selected as the distance to the screen 1. If the number of distance measuring results of CONF(FLG2 = OK is small, from the distance measuring results of CONF(FLG1 = OK shown in Fig. 19B, the distance of the center value except the maximum value and the minimum value or the average value can also be selected. Alternatively, in the case where the average value of the distance measuring result, or the distance measuring result of the center distance measuring arithmetic area 31c4 of the line sensor 31c is CONF(FLG2 = OK (the case of Fig. 19B is different), it may be used. In this way, the distance detection with high accuracy can be performed.

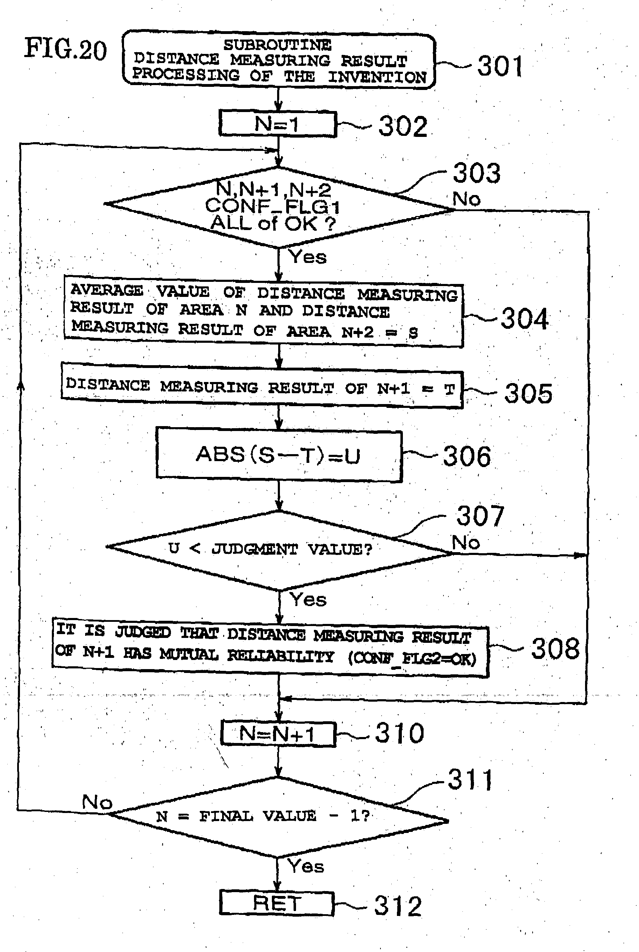

Next, the operation of the angle detector of this embodiment will be described with reference to flowcharts shown in Figs. 17 and 20. Incidentally, since Fig. 17 has been described in the first embodiment, its description in this embodiment will be omitted.

Fig. 20 is the flowchart showing a subroutine for performing mutual reliability judgment of the invention executed in the block 109 in Fig. 17. These subroutines are executed in the mutual reliability judgment part 51 shown in Fig. 3.

When entering into the block 109 of Fig. 17 is performed, the subroutine of the distance measuring result processing of Fig. 18 is started (block 301), and N = 1 is set (302). Then, it is checked whether all data reliabilities (CONF(FLG1 = OK) of the distance measuring arithmetic areas N, N+1 and N+2 are successful (303). If the data reliabilities (CONF(FLG1 = OK) of the three consecutive distance measuring arithmetic areas are not successful, 1 is added to N (310), and when N after the addition is a value obtained by subtracting 1 from the final value (seven in this embodiment) (311), returning to the block 110 of Fig. 17 is performed. When N after the addition is not the value obtained by subtracting 1 form the final value (311), returning to the block 303 is performed. If the data reliabilities (CONF(FLG1 = OK) of the three consecutive distance measuring arithmetic areas are successful (303), the average value S of the distance measuring result of the area N and the distance measuring result of the area N+2 is obtained (304). Then, the distance measuring result of the area N+1 is made T (305), and the absolute value U of the difference between S and T is obtained (306).

If the absolute value U of the difference between S and T is a predetermined judgment value or higher (307), it is judged that the measurement data of the three adjacent areas have no reliability, and CONF (FLG2 = NG is set, and proceeding to block 310 is performed. If the absolute value U of the difference between S and T is less than the predetermined judgment value, since the distance measuring result of the distance measuring arithmetic area N+1 has the linear relation to the distance measuring results by both the adjacent distance measuring arithmetic areas, it is judged that they have reliability (307), and CONF(FLG2 = OK is set (308). That is, they are used for the angle arithmetic operation at the block 110 of Fig. 17. However, unless the number of distance measuring results for which CONF (FLG2 = OK is set is two or larger, the distance measuring results necessary for the angle arithmetic operation do not exist, and accordingly, when the number of distance measuring results for which CONF(FLG1 = OK is set in Fig. 17 is two or larger, the angle arithmetic operation is performed by using them (110). In the case where there are plural inclination angles (1 obtained by calculation in this way, the center value except the maximum value and the minimum value among them or the average value of them is made the inclination angle (1. In this way, the angle detection with high accuracy can be performed.

As shown in the flowchart of Fig. 20, in the angle detection apparatus of the invention, with respect to the distance measuring results in which the line sensor is used to measure the distances of the three adjacent positions arranged linearly on the planar body of the measurement object, the distance measuring result of the intermediate position ought to become substantially equal to the average value of the distance measuring results of positions of both ends, and therefore, if the distance measuring result of the intermediate position deviates from the average value of the distance measuring results of both the ends by the predetermined value or higher, it is judged that the distance measuring results have no linearity and the distance measuring results have no reliability, and they are not used for the subsequent processing. If the difference between the distance measuring result of the intermediate position and the average value of the distance measuring results of both the ends is less than the predetermined value, it is judged that the distance measuring results have linearity and accordingly have reliability, and they are used for the subsequent processing. Incidentally, the mutual reliability judgment method of the invention can also be performed in (2) instead of (1).

Next, a third embodiment of the invention will be described with reference to attached drawings. Incidentally, the same structures as the foregoing embodiments are denoted by the same numbers, and the description will be omitted.

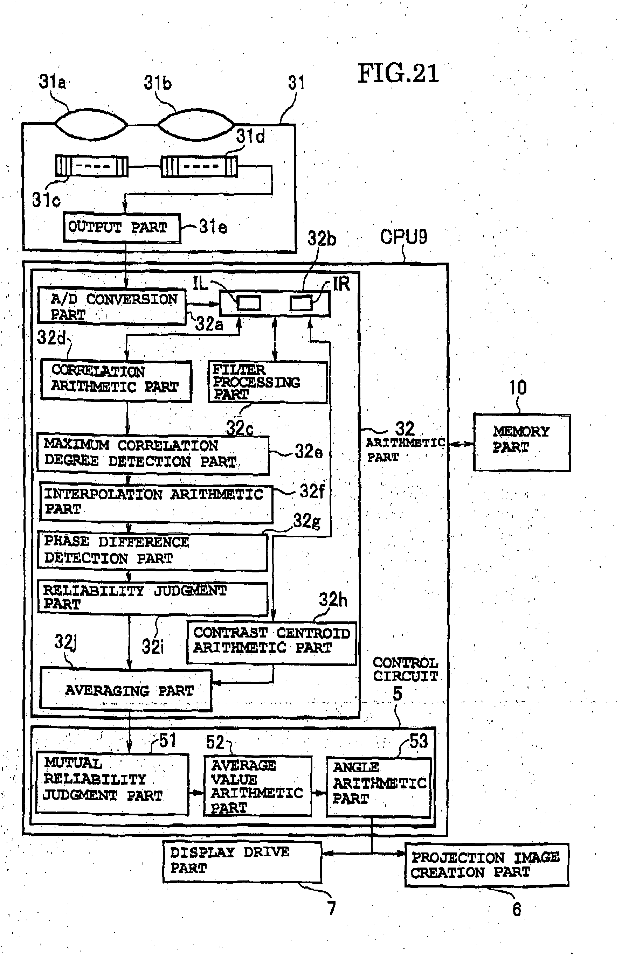

First, with reference to Fig. 21, the structure of a projector 2 according to this embodiment will be described using functional blocks. An arithmetic part 32 of this embodiment shown in Fig. 21 includes an averaging part 32j in addition to the arithmetic part 32 shown in Fig. 3. The averaging part 32j is connected to a reliability judgment part 32i, and from results of plural measurements of each of distance measuring areas (for example, each of seven distance measuring areas) of a line sensor 31c, the averaging part averages the measurement results which are judged to have reliability by the reliability judgment part 32i, and outputs the average value to a control circuit 5. Besides, the averaging part 32j is also connected to a contrast centroid arithmetic part 32h, averages the contrast centroid positions of results of plural measurements concerning each of the distance measuring areas (for example, each of seven distance measuring areas) of the line sensor 31c by the contrast centroid arithmetic part 32h, and outputs the average value to the control circuit 5. In this way, the averaging part 32j stores the plural distance measuring results and contrast centroid position arithmetic results concerning each of the distance measuring areas (for example, each of the seven distance measuring areas) of the line sensor 31c, calculates the average value of those, and outputs it to the control circuit 5.

An angle arithmetic part 53 of the control circuit 5 performs a correlation arithmetic operation using the least square method to obtain an inclination angle from distance measuring results, performs an approximation calculation to obtain a straight line expressing a correlation between the plural distance measuring results, and obtains the inclination angle of the screen 1 of the measurement object from the angle of the obtained straight line. As described later in detail, in order to obtain the angle of the straight line expressing the correlation, the angle arithmetic part 53 also performs an arithmetic operation to obtain a position coordinate of an intersection of a vertical line drawn from a measurement position of the screen 1 of the measurement object and a first straight line extending from a base line.

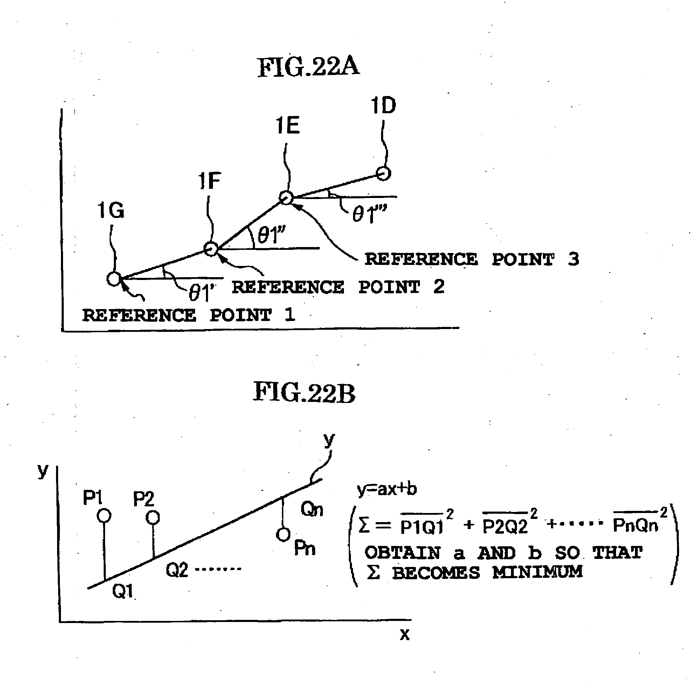

As described in the respective embodiments, in the case where the distance measuring results are lengths of vertical lines drawn from plural measurement positions on the plane of the screen 1 onto the straight line extending in the direction of the base line length k (in the case of LR' of Fig. 5 or LL' and LR' of Fig. 8), they ought to be originally linearly changed. However, actual distance measuring results do not change linearly as indicated by measurement results 1D, 1E, 1F and 1G of four circular dots of Fig. 22A. Such deviation from the linear relation is caused by manufacture error, noise at the time of measurement, or the like. Incidentally, in Fig. 22A, the horizontal axis indicates the contrast centroid position, and the vertical axis indicates the measured distance (distance measuring result).

In the case where the method for obtaining the inclination angle (1 explained in Fig. 8 or Fig. 13 is used, as the two measurement positions necessary for calculating the inclination angle (1, the measurement values indicated by the four circular dots 1D, 1E, 1F and 1G of Fig. 22A are used. For example, when 1G is made a base point 1, and the measurement point 1F adjacent thereto is used, an inclination angle (1' is obtained, when 1F is made a base point 2 and the measurement point 1E adjacent thereto is used, an inclination angle (1" is obtained, and when 1E is made a base point 3 and the point 1D adjacent thereto is used, an inclination angle (1"' is obtained. There is a possibility that the obtained inclination angle varies according to the way of obtaining the inclination angle explained in Fig. 8 or Fig. 13 in dependence on the way of selecting the base point and another measurement point.

In order to obtain the inclination angle (1 of the screen 1 from the different inclination angles (1', (1" and (1"' as stated above, a further processing must be performed, for example, an intermediate value obtained by removing the maximum value and the minimum value from the different inclination angles (1', (1" and (1"' or an average value of them is obtained. As stated above, it is difficult to uniquely calculate the accurate inclination angle (1 of the screen 1 from the plural distance measuring results.

The way of obtaining the inclination angle (1 according to this embodiment is different from the way of obtaining it as described in Fig. 8 or Fig. 13. Among measurement values of plural measurement positions arranged linearly on the plane measurement object, there is a specific correlation (distribution), that is, a correlation (distribution) that they are arranged linearly, and in this embodiment, a straight line expressing the correlation (distribution) of the plural measurement values is obtained by approximation, and the screen inclination angle (1 is obtained from the inclination of the straight line obtained by the approximation.

As shown in Fig. 22B, in the invention, a correlation between the distance measuring results of the plural measurement positions arranged linearly on the plane of the screen 1, that is, a straight line y = ax + b expressing the distribution is obtained by the approximation. Here, x denotes a coordinate position on a straight line extending from the base line length k (that is, the horizontal axis of Fig. 22B), and y denotes a distance from the base line length k to the position on the screen 1 (that is, the vertical axis of Fig. 22B), and a denotes the inclination of this straight line y. The inclination a of this straight line y becomes the inclination angle (1 of the screen 1 to be obtained. That is, a = (1. In order to obtain this straight line y from the distribution of the measurement results of the plural measurement positions, that is, from the correlation by the approximation, the least square method is used.

As shown in Fig. 22B, in the least square method used in this embodiment, in the case where points expressing measurement results of the respective measurement positions corresponding to the circular dots 1G, 1F, ( ( ( in Fig. 22A are made P1, P2, ( ( (, Pn, and intersections of lines drawn from the respective points P1, P2, ( ( (, Pn in the vertical direction toward the horizontal axis of Fig. 22B corresponding to a straight line extended from the base line length k and the straight line y = ax - b are made Q1, Q2, ( ( (, Qn, the values of the inclination a and b of the straight line y = ax + b are obtained so that the sum total ( of the squares of the lengths of respective line segments P1Q1, P2Q2, ( ( (, PnQn becomes minimum.

Incidentally, a method for obtaining the inclination a of the straight line y = ax + b expressing the correlation (distribution) of the plural measurement results by the least square method is well known. For example, x and y coordinate values of the points P1, P2, ( ( (, Pn indicating the measurement results of n measurement positions in Fig. 22B are respectively made (x1, y1), (x2, y2), ( ( (, (xn, yn).

The average value of the x coordinate values of the points P1, P2, ( ( (, Pn of the n plural measurement results are made xm = (x1 + x2 + ( ( ( + xn)/n, and the average value of the y coordinate values is made ym = (y1 + y2 + ( ( ( + yn)/n. The variance of x coordinate values of the points P1, P2, ( ( (, Pn of the n plural measurement results i s (2x = [(x1 - xm)2 + (x2 - xm)2 + ( ( ( + (xn - xm)2]/n, the variance of the y coordinate values is (2y= [(y1 - ym)2 + (y2 - ym)2 + ( ( ( + (yn - ym)2]/n, and the covariance becomes (xy = [(x1 - xm) (y1 - ym) + (x2 - xm) (y2 - ym) + ( ( ( + (xn - xm) (yn - ym)]/n.

The correlation coefficient is (xy = (xy/(x(y.

According to the least square method, the inclination a of the straight line y = ax + b expressing the correlation (distribution) of the n plural measurement results is obtained from the relation of a = (y(xy/(x. On the other hand, b is obtained from the relation of b = ym - xm(y(xy/(x. The inclination angle (1 of the screen 1 is obtained from the inclination a and from the relation of (1 = tan-1a.

The n plural measurement values are originally related to each other so that they are substantially linearly changed, and one inclination angle (1 ought to be uniquely calculated from this linear change. However, actually, because of various causes such as noise and manufacture error, even if the measured distances are connected to each other, they are not arranged linearly, and as shown in Fig. 22A, they are arranged like a line graph. In this embodiment, in order to solve this problem, the correlation is used in which when distances to plural positions linearly arranged on the planar body of the measurement object are measured, the distance measuring results of them are linearly distributed, and such a straight line y = ax + b that errors by distance measurement of respective positions become minimum is calculated by using the least square method, and the inclination a of the straight line y is used as the inclination angle of the screen 1.

Besides, when the inclination angle (1 is calculated from the distance measuring results subjected to the averaging processing in the first embodiment, that is, from the averaged values shown in Fig. 15B by using the least square method of this embodiment, the angle with higher accuracy can be calculated.

Incidentally, in the case where the projection optical system 8 of the projector 2 has the autofocus mechanism, automatically detects the distance to the screen 1, and performs autofocus of an image projected on the screen 1, the center value except the maximum value and the minimum value among the average values of the distance' measuring results shown in Fig. 15B or the average value of them can be selected as the distance to the screen 1. Alternatively, in the case where the distance measuring result of the center distance measuring arithmetic area 31c6 of the line sensor 31c has a linear relation to the distance measuring results of both the adjacent distance measuring arithmetic areas, it may be used. In this way, the distance with higher accuracy is detected, and accurate automatic focusing can be performed.

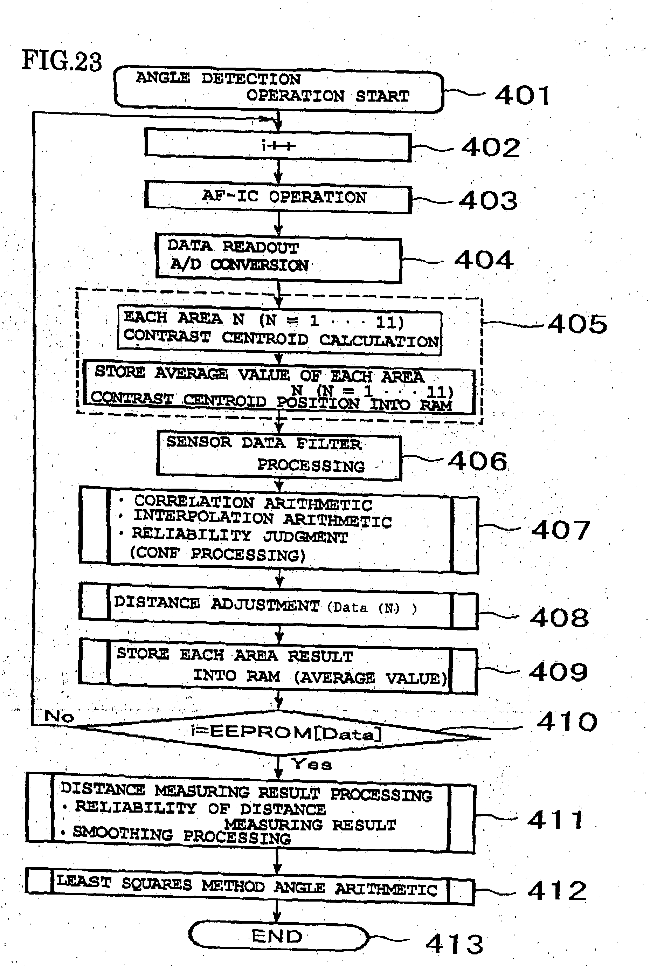

Next, the operation of the angle detector of this embodiment will be described with reference to Figs. 23 to 26.

First, a description will be given with reference to Fig. 23 as well as Fig. 1. When the power is turned on to the projector 2 or the periodic angle detection operation is started during the operation of the projector 2, the control circuit 5 judges whether or not input image data is inputted from a not-shown outside personal computer or the like, and when the input image.data from the outside exists, the control circuit causes the projection image creation part 6 to output display data corresponding to the image data, and projects an image on the screen 1 through the display drive part 7 and the projection optical system 8. If the input image data does not exist, the control circuit 5 outputs contrast image data for adjustment (for example, suitable image data including a logo mark or the like) previously stored in the projector 2 to the projection image creation part 6, and projects the image on the screen 1 through the display drive part 7 and the projection optical system 8 (Fig. 23, block 401).

The above operation is the operation for detecting the angle by using the image projected by the original image projection function of the projector 2, and as stated above, the line type passive distance measuring devices 3 and 4 do not need light projection parts dedicated for projection of the contrast image for adjustment. Subsequently, the control circuit 5 sets the number i of measurement times to an initial value (for example, (10 in an EEPROM (memory part 10), activates the distance measurement function and angle detection function of the image pickup parts 31 and 41 of the line type passive distance measuring devices 3 and 4 (403), measures distances to plural positions on the screen 1 in the horizontal plane and the vertical plane, and detects the inclination angle of the screen 1 with respect to the projector 2 in the horizontal plane and the vertical plane as described later. Incidentally, as described above, the angle detection operation start (401) is not limited to the time of the turning-on of the power to the projector 2, but can be performed at any time during the operation of the projector 2. At this time, any image projected on the screen 1 is used for distance measurement to perform angle detection.

Next, the distance measuring operation and inclination angle detection operation will be described with reference to Fig. 23 as well as Fig. 21. The image pickup parts 31 and 41 are operated, and data is read out from the line sensor and is A/D converted (32a in Fig. 21) (404). The contrast centroids of the respective distance measuring arithmetic areas (area) 31cN (N = 1, ( ( (, 11) of the line sensor are calculated by the contrast centroid arithmetic part (32h of Fig. 21), the average value of the contrast centroids of the respective distance measuring arithmetic areas (areas) 31cN (N = 1, ( ( (, 11) are obtained by the averaging part (32j of Fig. 21), and are stored in a RAM (memory 10) (405). A filter (32c in Fig. 21) processing for removing a direct current component from the sensor data of the line sensor is performed (406), and then, with respect to the distance measuring arithmetic areas 31c1 to 31c11, a correlation arithmetic operation (32d and 32e in Fig. 21), an interpolation arithmetic operation (32f in Fig. 21), a phase difference detection arithmetic operation (32g in Fig. 21), and a reliability judgment (judgment by the normal reliability judgment part 32i of Fig. 21 as to whether the degree of coincidence obtained in the maximum correlation detection part 32e is a predetermined value or higher) are performed, and if the reliability judgment is successful, CONF(FLG1 = OK is set (407). If two or more distance measuring arithmetic areas (areas) do not pass the data reliability judgment (CONF(FLG1 = OK), angle detection is impossible.

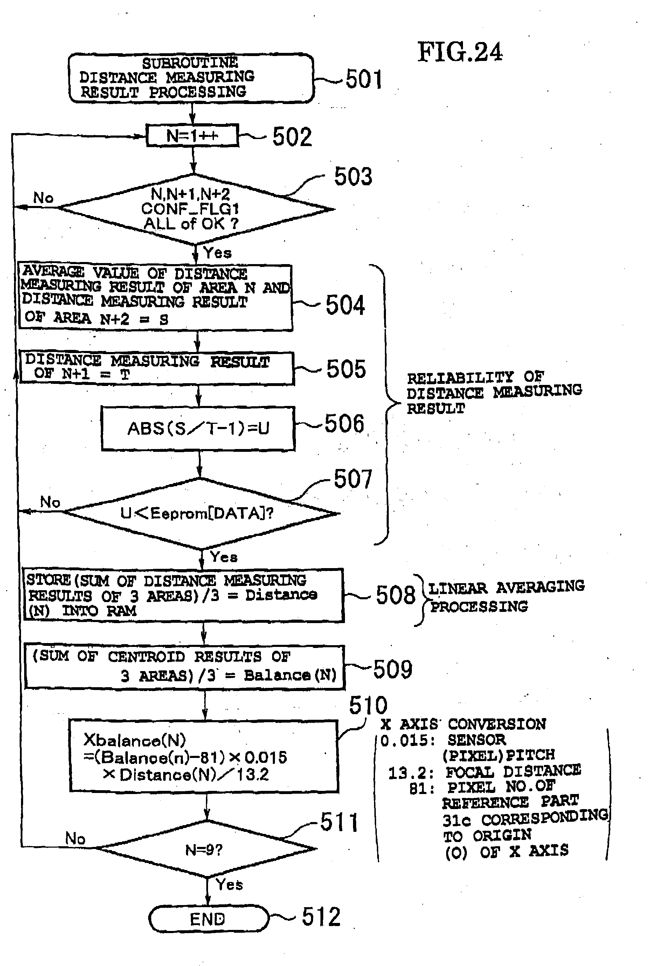

If two or more distance measuring arithmetic areas pass the data reliability, the distance is calculated by the method explained with reference to Fig. 5 (408). When the distance is calculated, a well-known correction such as a lens aberration correction or temperature correction is performed (408). Then, the calculated distance measuring results of the respective distance measuring arithmetic areas (areas) 31cN (N = 1, ( ( (, 11) are stored in the RAM (memory part 10), and the average value (half adjust and in a unit of mm) by the plural number i of measurement times is obtained by the averaging part (32j of Fig. 21) (409). In this way, _the averaging part (32j of Fig. 21) obtains a value by averaging measurement results of distances and contrast centroid positions for each of the distance measuring arithmetic areas 31cN (N = 1, ( ( (, 11) with the number of measurement times, and it is stored in the RAM (memory part 10). Then, this is repeated until the number of measurement times reaches the number i of measurement times stored

in the EEPROM (memory part 10). When it reaches the number i of measurement times, a judgment processing of mutual reliability (propriety as to whether there is much inconsistency with measurement results of the former and latter distance measuring arithmetic areas) of the distance measurement value and contrast centroid measurement value of each of the distance measuring arithmetic areas 31cN (N = 1, ( ( (, 11), which are averaged by the averaging part (32j of Fig. 21) using the number i of measurement times and the processing of smoothing (since the measurement object is the plane of the screen, fluctuation is decreased by averaging with measurement results of the former and latter distance measuring arithmetic areas) processing are performed (411). The processings (411) are described in Fig. 24 in detail.

With reference to Fig. 24, the subroutine (501) for explaining the , processing of the block 411 of Fig. 23 in detail is shown. This subroutine performs the same processing as the subroutine of the first embodiment shown in Fig. 18, and is executed in the mutual reliability judgment part 51 and the average value arithmetic part 52 shown in Fig. 21. Since this subroutine performs the processing concerning the measurement result of each of the distance measuring arithmetic areas 31cN (N = 1, ( ( (, 11), 1 is added to N (N is an integer of from 0 to 9) (502). In the small group including the three adjacent distance measuring arithmetic areas 31cN, 31cN+1 and 31cN+2, if the data reliability judgment (CONF(FLG1 = OK) of all the distance measuring arithmetic areas is not successful, returning to the block (502) is performed. When the data reliability judgment (CONF(FLG1 = OK) of all the distance measuring arithmetic areas 31cN, 31cN+1, 31cN+2 is successful, the mutual reliability judgment (blocks 504 to 507) and the averaging processing (blocks 508 and 509) are applied.

If the data reliability (CONF(FLG1 = OK) of the three consecutive distance measuring arithmetic areas is successful (503), the average value S of the distance measuring result of the distance measuring arithmetic area N and the distance measuring result of the distance measuring arithmetic area N+2 is obtained (504). Then, the distance measuring result of the area N+1 is made T (505), and the absolute value U = (S/T - 1( of the difference between the ratio S/T of S to

T and 1 i s obtained (506).

If the absolute value U of the difference is a predetermined judgment value Eeprom[DATA] or higher (507), it is judged that the measurement data of the three adjacent distance measuring arithmetic areas have no reliability, and returning to the block 502 is performed. If the absolute value U of the difference is less than the predetermined judgment value,. it is judged that the measurement data of the three adjacent distance measuring arithmetic areas have reliability (507). Then, the averaging processing of the measurement data of the three adjacent distance measuring arithmetic areas is applied. That is, the average value of the distance measuring results by the three adjacent distance measuring arithmetic areas 31cN, 31cN+1, and 31cN+2 is obtained. That is, (total of distance measuring results of the three distance measuring arithmetic areas N, N+1, and N+2)/3 = Distance(N) is calculated and is stored in the memory part 10 (508). Further, (total of contrast centroid results of the three distance measuring arithmetic areas N, N+1, and N+2)/3 = Balance(N) is calculated and is stored in the memory part 10 (509). This result is shown in Fig. 15B.

Next, from Balance (N) obtained at the block 509, conversion for obtaining x coordinate values of respective measurement points necessary for the least square method, Xbalance(N) = (Balance(N) - 81) x 0. 015 x Distance (N)/13.2 is performed (510). Here, the numeral in the above conversion expression, 81 is the pixel number of the reference part line sensor 31c corresponding to the origin (0) of the x axis, 0. 015 is a pixel pitch (mm) of the line sensor, and 13. 2 is a focal distance f (mm).

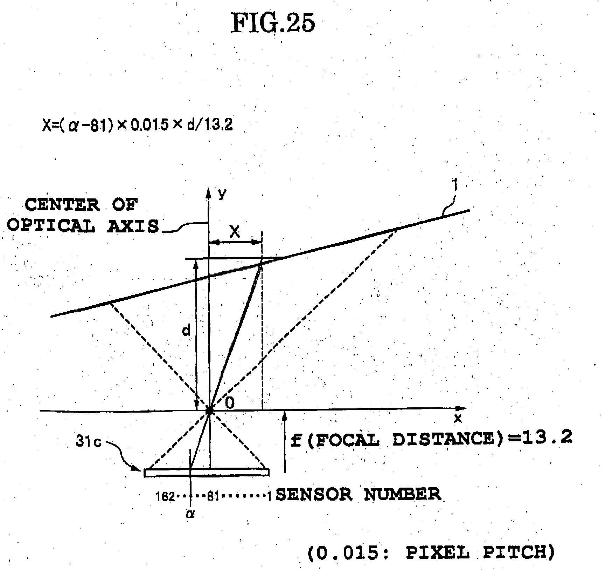

Fig. 25 is a view for explaining the expression of the x axis conversion of Fig. 24, Xbalance(N) = (Balance(N) - 81) x 0.015 x Distance(N)/13.2. The x axis coordinate value X of a measurement position on the screen 1 imaged in the detector of the pixel number of Xbalance(N) = ( is calculated by (( - 81) x 0.015 by using that the length from the pixel number 81 corresponding to the x axis coordinate origin (0) of the line sensor 31c to Xbalance(N) = ( is 0. 015 mm of the pixel pitch. Here, since the typical value Distance(N) = d of the distance measuring results of the three distance measuring arithmetic areas and the focal distance f = 13.2 mm may be regarded as having the ratio of a similar triangle, the relation of Distance(N)/f = X/[(( - 81) x 0.015] is established.

From this relation, the expression of the x axis conversion is derived. Incidentally, as the y coordinate values of the respective measurement points necessary for the least square method,

Distance(N) obtained at the block 208 is used. Reference is made to Fig. 24 again. If N does not reach 9 (511), returning to the block 502 is performed. In the case where N reaches 9 (511), the subroutine of Fig. 24 is ended (512), and Proceeding to the block 412 of Fig. 23 is performed. At the block 412 of Fig. 23, the straight line y = ax + b expressing the correlation (distribution) of plural measurement results obtained by the block 411 is obtained by approximation using the least square method of the invention, and the processing is performed to uniquely derive the inclination angle (1 of the screen 1 from the inclination a of this straight line.

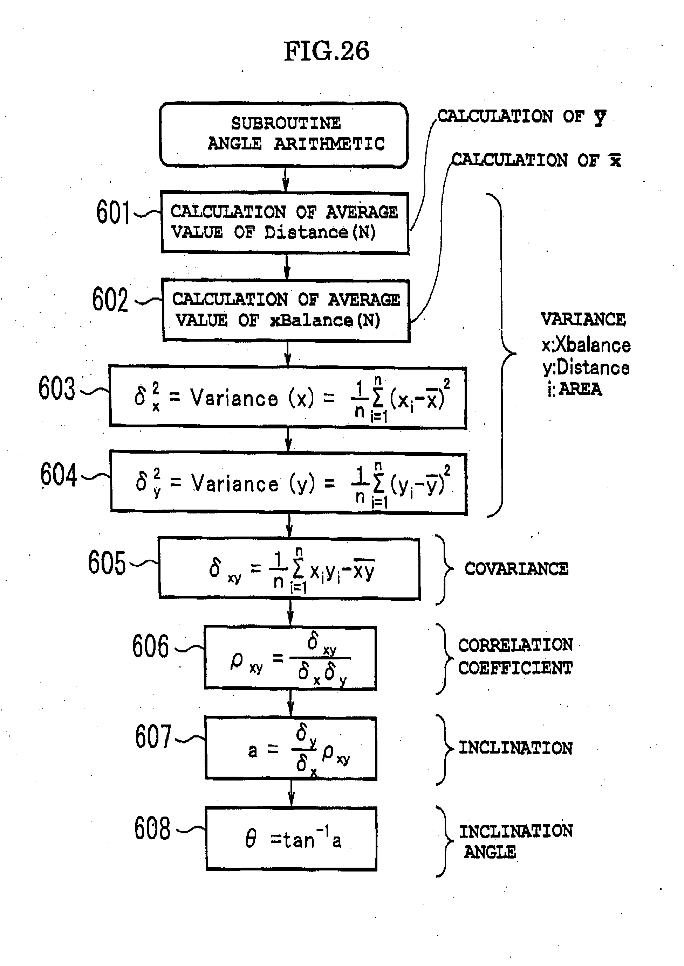

The details of the block 412 are shown in a flowchart of an angle arithmetic subroutine of Fig. 26. This angle arithmetic operation is executed by the angle arithmetic part 53 of the control circuit 5 of Fig. 21.

With reference to Fig. 26, the average of the typical value Distance(N) as the average of the distance measuring results for each of the small groups including the three measurement positions obtained at the block 508 of Fig. 24 is calculated (where N is an integer of from 1 to 9) (601). Then, the average of the x-axis coordinate value xBalance(N) obtained by x-axis conversion of the typical value as the average of the contrast centroid results for each of the small groups including three measurement positions obtained at the block 510 of Fig. 24 is calculated (where N is an integer of 1 to 9) (602). Next, the variance (2x of x-coordinate values is obtained (603), and the variance (2y of y-coordinate values is obtained (604). Then, covariance (xy is obtained (605), and the correlation coefficient (xy is obtained (606). Then, the inclination a of the straight line y = ax + b expressing the correlation (distribution) of plural measurement results is obtained (607). The inclination angle (1 of the screen 1 is uniquely obtained from the obtained inclination a (608). When the inclination angle (1 is obtained in this way, returning to Fig. 23 is performed and ending is performed (413).

The angle detection apparatus of the invention uses the line sensor to measure the distances of the plural positions arranged linearly on the planar body of the measurement object, and approximates, from the results, the straight line expressing the correlation (distribution) of the results of the plural measurement positions by the least square method, and uniquely derives the inclination angle of the screen 1 from the inclination of this straight line.

In this embodiment, as the method for approximating the straight line expressing the correlation (distribution) of the plural measurement points, the least square method has been described, however, the straight line expressing the correlation (distribution) of the plural measurement points may be approximated by using a different approximation method in addition to the least square method.

Besides, when the judgment of Yes is performed at the step 410 of Fig. 23, the step 411 is omitted and proceeding to the step 412 may be performed. In this case, the simplification of processing is achieved.

In the description of the foregoing respective embodiments, although the description has been given to the angle detection of the inclination angle (1 of the screen 1 with respect to the direction of the base line length k in the horizontal plane by the line type passive distance measuring device having the base line length k in the horizontal direction, it would be easily understood that the same applies to the angle detection of the inclination angle of the screen 1 with respect to the direction of the base line length k' (not shown) in the vertical plane by the line type passive distance measuring device 4 having the base line length k (not shown) in the vertical direction.

Besides, in the respective embodiments, although the line type passive distance measuring device is used as the distance measuring part for measuring the distance, any device may be used as long as a line type is adopted, and an active type, not the passive type, may be used, and the device may not be an optical system. For example, a device may be such that ultrasound is outputted, a time having passed before the reflection thereof is detected is measured, and a distance is measured on the basis of the time. In the foregoing embodiments, although the pair of line type passive distance measuring devices in the horizontal direction and vertical direction are used, it is not necessary to dispose them in an orthogonal relation, and only one line type distance measuring device may be used. Besides, although the plane of the screen is used as the measurement object, the angle detection apparatus of the invention can be applied to a measurement object of any planar body in addition to the screen. For example, as the planar body of the measurement object, a workpiece to be machined by a working machine may be adopted, and for the purpose of causing a working tool to correctly face toward the workpiece, the angle detector of the invention can be applied in order to detect a relative inclination angle between the workpiece and the working tool.

According to the invention, even in the case where the distance measurement to one position on the planar body of the measurement object can not be accurately performed due to noise or the like or manufacture error, its influence can be reduced. Besides, even in the case where the distance measurement of at least one position can not be accurately performed, its influence can be reduced. Further, since it becomes possible to measure distances to plural different positions on the planar body of the measurement object by providing one line type passive distance measuring device, it is not necessary to increase the number of distance measuring devices in accordance with the increase of measurement positions as in the conventional apparatus, and the structure of the angle detection apparatus can be simplified.

**Claims**

1.   An angle detection apparatus comprising a line type distance measuring device including a pair of lenses disposed on a same plane to be spaced from each other by a base line length, a line sensor spaced from the pair of lenses by a predetermined distance, disposed to extend in a direction of the base line length, and made of a line of plural detectors on which a planar body as a distance measurement object is imaged through the pair of lenses, and an arithmetic part for calculating distances to plural different positions on the measurement object in plural different distance measuring directions on a plane including the base line length and the line sensor on the basis of output from the line sensor, wherein the angle detection apparatus comprises:

typical value calculation means for forming plural small groups including some of the positions spatially adjacent to each other from the plural positions and calculating a typical value of the distances calculated by the arithmetic part for each of the small groups; and
inclination angle calculation means for calculating, on the plane including the base line length and the line sensor, an inclination
angle of the planar body with respect to the same plane on the basis of the typical value.

2. The angle detection apparatus as recited in claim 1, wherein the typical value calculated by the typical value calculation means is an average value of the measurement distances in the small group.

3. The angle detection apparatus according to claim 1 or 2, wherein the line sensor includes a first light receiving area in which one of a pair of images of the measurement object created by the pair of lenses is imaged, and a second light receiving area in which the other of the pair of images is imaged, the first light receiving area includes plural distance measuring arithmetic areas respectively set to correspond to the plural different distance measuring directions,
the arithmetic part obtains the distances to the plural positions in the plural distance measuring directions by performing a distance measuring arithmetic operation on the basis of output from the distance measuring arithmetic areas in the first light receiving area and output from the second light receiving area,
the typical value calculation part further calculates a contrast centroid position of each of the plural distance measuring arithmetic areas and obtains a centroid position typical value of a contrast distribution in the plural distance measuring arithmetic areas corresponding to each of the small groups, and
the inclination angle calculation part calculates, on the plane including the base line length and the line sensor, the inclination angle of the planar body of the measurement object with respect to the same plane on the basis of the typical value of the distances calculated by the typical value calculation part and the centroid position typical value of the contrast distribution.

4. The angle detection apparatus as recited in any one of claims 1 to 3, wherein
the arithmetic part further comprises a judgment part for judging, with respect to distance measuring results obtained by performing
the distance measuring arithmetic operation of the distances to the plural different positions on the measurement object, existence of reliability of the distance measuring results of the distance measuring arithmetic operation on the basis of a correlation of the plural different positions in each of the small groups, and
the typical value calculation part calculates the typical value of the distance measurements from the distance measuring results of the small group judged to have the reliability by the judgment part.

5. An angle detection apparatus comprising:

a distance measuring part for obtaining distances to plural measurement positions arranged on a straight line extending on a planar body as a measurement object;
a typical value calculation part for dividing the plural measurement positions into plural small groups spatially adjacent to each other and obtaining a typical value of the distances as distance measuring results by the distance measuring part in each of the small groups; and
an inclination angle calculation part for calculating an inclination angle between the distance measuring part and the measurement object on the basis of the typical value of the distances.

6. An angle detection apparatus comprising:

a line type distance measuring device including a pair of lenses disposed on a same plane to be spaced from each other by a base line length, a line sensor spaced from the pair of lenses by a predetermined distance, disposed to extend in a direction of the base line length, and made of a line of plural detectors on which a planar body as a distance measurement object is imaged through the pair of lenses, and an arithmetic part for calculating distances to plural different positions on the measurement object in plural different distance measuring directions on a plane including the base line length and the line sensor on the basis of output from the line sensor;
a judgment part for judging existence of reliability of the distances as arithmetic operation results of the arithmetic part by forming a small group including the some positions from the plural positions and on the basis of a correlation of the arithmetic operation results in the small group; and an inclination angle calculation part for calculating an inclination angle of the planar body with respect to the same plane on the plane including the base line length and the line sensor on the basis of the arithmetic operation results judged to have the reliability by the judgment part.

7. The angle detection apparatus according to claim 6, wherein the judgment part judges the existence of the reliability of the arithmetic results on the basis of whether the arithmetic results correspond to a desired straight line to be determined by the arithmetic results in the small group.

8. The angle detection apparatus according to claim 6, wherein the judgment part judges the existence of the reliability of the arithmetic results on the basis of whether the arithmetic results are included in a desired reliability judgment area to be determined by the arithmetic results in the small group.

9. The angle detection apparatus according to claim 7 or 8, wherein the small group includes three positions adjacent to each other, and the judgment part judges whether the arithmetic result of the center position corresponds to or contained in the desired straight line or the reliability judgment area to be determined by the arithmetic results of two positions of both ends of the three positions.

10. The angle detection apparatus according to claim 7 or 8, wherein the line sensor includes a first light receiving area in which one of a pair of images of the measurement object created by the pair of lenses is imaged and a second light receiving area in which the other of the pair of images is imaged, plural distance measuring arithmetic areas corresponding to the plural distance measuring directions are set in the first light receiving area, and the arithmetic part performs a distance measuring arithmetic operation concerning the plural distance measuring directions on the basis of output from the distance measuring arithmetic areas in the first light receiving area and output from the second light receiving area.

11. The angle detection apparatus according to claim 10, wherein the small group includes positions corresponding to three distance measuring directions adjacent to each other, and the judgment part judges whether an arithmetic result of a position corresponding to the center distance measuring direction corresponds to a desired linear relation to be determined by two arithmetic results of the positions corresponding to the distance measuring directions of both ends in the three distance measuring directions.

12. An angle detection apparatus comprising:

a distance measuring part for obtaining distances to plural measurement positions arranged on a straight line extending on a planar body of a measurement object:

a judgment part for judging existence of reliability of the distances as distance measuring results of the distance measuring part by dividing the plural measurement positions into plural small groups and on the basis of a correlation of the distance measuring results in the small groups; and an inclination angle calculation part for calculating an inclination angle between the distance measuring part and the measurement object on the basis of the distance measuring results judged to have the reliability by the judgment part.

13. An angle detection apparatus comprising:

a line type distance measuring device including a pair of lenses disposed on a same plane to be spaced from each other by a base line length, a line sensor spaced from the pair of lenses by a predetermined distance, disposed to extend in a direction of the base line length, and made of a line of plural detectors on which a planar body as a distance measurement object is imaged through the pair of lenses, and an arithmetic part for calculating distances to plural different positions on the measurement object in plural different distance measuring directions on a plane including the base line length and the line sensor on the basis of output from the line sensor; and an inclination angle calculation part for using at least two arithmetic results of the distances calculated by the arithmetic part to approximate a straight line expressing a correlation of the arithmetic results, obtaining an inclination of the approximated straight line, and calculating an inclination angle of the planar body with respect to the same plane on the plane including the base line length and the line sensor on the basis of the inclination.

14. The angle detection apparatus as recited in claim 13, wherein the arithmetic part calculates, as the distances, lengths of plural vertical lines drawn from the plural different positions on the measurement object in the plural different distance measuring directions onto a first straight line extended from the base line, and

the inclination angle calculation part further includes a coordinate position calculation part to determine plural coordinate positions on the first straight line corresponding to the plural different positions, respectively, approximates a straight line expressing a correlation among plural positions determined from pairs of the determined coordinate positions and the calculated distances corresponding to those, and calculates the inclination angle from the inclination of the straight line.

15. The angle detection apparatus as recited in claim 14, wherein the approximation of the straight line expressing the correlation is based on a least square method.

16. An angle detection apparatus comprising:

a line type distance measuring device including a pair of lenses disposed on a same plane to be spaced from each other by a base line length, a line sensor spaced from the pair of lenses by a predetermined distance, disposed to extend in a direction of the base line length, and made of a line of plural detectors on which a planar body as a distance measurement object is imaged through the pair of lenses, and an arithmetic part for calculating distances to plural different positions on the measurement object in plural different distance measuring directions on a plane including the base line length and the line sensor on the basis of output from the line sensor;

a typical value calculation part for obtaining typical values of positions of plural small groups including some of the plural different positions on the measurement object, respectively, from the calculated distances; and

an inclination angle calculation part for using the plural typical values obtained from the typical value calculation part to approximate a straight line expressing a correlation of the typical values, obtaining an inclination of the approximated straight line, and calculating an inclination angle of the planar body with respect to the same plane on the plane including the base line length and the line sensor on the basis of the inclination.

17. The angle detection apparatus as recited in claim 16, wherein the arithmetic part calculates, as the distances, lengths of plural vertical lines drawn from the plural different positions on the measurement object in the plural different distance measuring directions onto a first straight line extended from the base line length,

the typical value calculation part obtains distances to the typical values of the positions of the plural small groups including some of the plural different positions on the measurement object, respectively, from the calculated distances, and

the inclination angle calculation part further includes a coordinate position calculation part for determining coordinate positions on the first straight line corresponding to the typical values of the positions, approximates the straight line expressing the correlation among the plural typical values decided from pairs of the determined coordinate positions and the distances to the typical values of the positions corresponding to those, and calculates the inclination angle from the inclination of the straight line.

18. The angle detection apparatus as recited in claim 17, wherein the approximation of the straight line expressing the correlation is performed by a least square method.

19. The angle detection apparatus as recited in any one of claims 16 to 18, wherein the typical value calculation part prepares the plural small groups, each including a predetermined number of the positions adjacent to each other from the plural different positions on the measurement object, by shifting the positions included in the small group one by one, and obtains the distances to the typical values of the positions for the respective small groups from distances to the positions included in the respective small groups.

20. An angle detection apparatus comprising:

a distance measuring device for measuring distances to plural mutually different measurement points arranged substantially linearly on a measurement object of a planar body; and

an inclination angle calculation part for approximating a straight line expressing a correlation between at least two measured distances, obtaining an inclination of the approximated straight line, and calculating an inclination angle of the measurement object with respect to the distance measuring device.

21. An angle detection apparatus comprising:

a distance measuring device for measuring distances to plural mutually different measurement points arranged substantially linearly on a measurement object of a planar body;

a typical distance value determination part for obtaining at least two typical distance measuring values on the basis of the plural measured distances; and

an inclination angle calculation part for approximating a straight line expressing a correlation between the at least two typical distance measuring values, obtaining an inclination of the approximated straight line, and calculating an inclination angle of the measurement object with respect to the distance measuring device on the basis of the inclination.

22. The angle detection apparatus according to any one of claims 1 to 21. wherein the measurement object is a screen on which an image is projected.

23. A projector for projecting an image on a screen, wherein the projector comprises an angle detection apparatus as recited in claim 22, and an image distortion correction part for correcting a distortion of the image on the screen on the basis of an inclination angle calculated by the angle detection apparatus.

24. An angle detection method comprising:

a distance measuring steps of obtaining distances to plural measurement positions arranged on a straight line extending on a planar body of a measurement object;
typical value calculation steps of forming plural small groups including some of the positions spatially adjacent to each other from the plural positions and calculating a typical value of the distances obtained by the distance measuring steps for each of the small groups; and
inclination angle calculation steps of calculating an inclination angle of the planar body on the basis of the typical value.

FIG.1

2 PROJECTOR

MEMORY PART — 10

9

CPU

3

32

31

ARITHMETIC PART

CONTROL CIRCUIT 5

ARITHMETIC PART

42

4

VARIOUS DATA SETTING

41

6

INPUT IMAGE

PROJECTION IMAGE CREATION PART

DISPLAY DATA

DISPLAY DRIVE PART

7

8

SCREEN 1

EP 1 426 732 A1

FIG.2

# FIG.3

31a 31b 31

31d

31c

OUTPUT PART — 31e

32b CPU9

IL IR

A/D CONVERSION PART

32d 32a

CORRELATION ARITHMETIC PART

FILTER PROCESSING PART

32c

MAXIMUM CORRELATION DEGREE DETECTION PART — 32e

32 ARITHMETIC PART

10

MEMORY PART

INTERPOLATION ARITHMETIC PART — 32f

PHASE DIFFERENCE DETECTION PART — 32g

32h

CONTRAST CENTROID ARITHMETIC PART

RELIABILITY JUDGMENT PART

~ 32i

CONTROL CIRCUIT 5

51

MUTUAL RELIABILITY JUDGMENT PART

52

AVERAGE VALUE ARITHMETIC PART

53

ANGLE ARITHMETIC PART

DISPLAY DRIVE PART

PROJECTION IMAGE CREATION PART

7

6

EP 1 426 732 A1

FIG.4A

FIG.4B

PICTURE DATA
LINE iL

PICTURE DATA
LINE iR

SHIFT
AMOUNT α

iLm

iRn

PARTIAL GROUP iL   PARTIAL GROUP iR

PARTIAL PICTURE DATA GROUP

FIG.5A

FIG.5B

PICTURE DATA LINE IL

PICTURE DATA LINE IR

SHIFT AMOUNT α'

iLm

iRn

PARTIAL GROUP iL

PARTIAL GROUP iR

PARTIAL PICTURE DATA GROUP

## FIG.6

| DISTANCE MEASURING AREA | (PIXEL NUMBER) | DISTANCE MEASURING AREA | (PIXEL NUMBER) |
|---|---|---|---|
| 31c1 | 31c(1)~31c(26) | 31c5 | 31c(53)~31c(78) |
| 31c2 | 31c(13)~31c(38) | 31c6 | 31c(65)~31c(90) |
| 31c3 | 31c(27)~31c(52) | 31c7 | 31c(79)~31c(104) |
| 31c4 | 31c(39)~31c(64) | | |

NUMERAL IN () INDICATES PIXEL No.

EP 1 426 732 A1

# FIG.7

BASE LINE LENGTH k

LENS 31b

LENS 31a

31c3  31c5  31c7     31d

1G     1E     1C          1

# FIG.8

LENS 31a

FOCAL
DISTANCE f

# FIG.9

## FIG.10

## FIG.11

## FIG.12

1M    1K

M  J  K

31cn

**DISTANCE MEASURING
ARITHMETIC AREA**

# FIG.13

BASE LINE
LENGTH DIRECTION

## FIG.14

BASE LINE
LENGTH DIRECTION

DISTANCE MEASURING RESULT

## FIG.15A

## FIG.15B

## FIG.16

EP 1 426 732 A1

FIG.17

ANGLE DETECTION START — 101

IMAGE PICKUP PART OPERATION — 102

DATA READOUT A/D CONVERSION — 103

SENSOR DATA FILTER PROCESSING — 104

- CORRELATION ARITHMETIC
- INTERPOLATION ARITHMETIC
- CONTRAST CENTROID ARITHMETIC
- RELIABILITY JUDGMENT CONF_FLG1 — 105

IN TWO OR MORE AREAS, CONF_FLG1 = OK? — 106 / No / Yes

DISTANCE CALCULATION — 107

IN THREE OR MORE AREAS, CONF_FLG1 = OK? — 108 / No / Yes

DISTANCE MEASURING RESULT PROCESSING
- RELIABILITY OF DISTANCE MEASURING RESULT — 109

ANGLE DETECTION IMPOSSIBILITY — 111

ANGLE ARITHMETIC — 110

END — 112

42

FIG.18

```
┌─────────────────────────────────────────────┐
│              SUBROUTINE                      │
│ DISTANCE MEASURING RESULT PROCESSING         │──201
│   OF THE INVENTION IS PERFORMED              │
└─────────────────────────────────────────────┘
                      │
                      ▼
              ┌───────────────┐
              │     N=1       │──202
              └───────────────┘
                      │
                      ▼
              N,N+1,N+2                           203
           CONF_FLG1                          No
           ALL of OK ?
                      │ Yes
                      ▼
┌─────────────────────────────────────────────┐
│ AVERAGE VALUE OF DISTANCE MEASURING          │
│ RESULT OF AREA N AND DISTANCE                │──204
│ MEASURING RESULT OF AREA N+2 = S             │
└─────────────────────────────────────────────┘
                      │
                      ▼
┌─────────────────────────────────┐
│     DISTANCE MEASURING           │──205
│       RESULT OF N+1 = T          │
└─────────────────────────────────┘
                      │
                      ▼
┌─────────────────────────────────┐
│        ABS(S−T)=U                │──206
└─────────────────────────────────┘
                      │
                      ▼
            U < JUDGMENT VALUE?                   207
                                             No
                      │ Yes
                      ▼
┌─────────────────────────────────────────────┐
│ STORE (SUM OF DISTANCE MEASURING RESULTS     │──208
│ OF N, N+1, AND N+2)/3 = Distance(N)          │
└─────────────────────────────────────────────┘
                      │
                      ▼
┌─────────────────────────────────────────────┐
│ STORE (SUM OF CENTROID RESULT OF N,          │──209
│ N+1 AND N+2)/3 = Balance(N)                  │
└─────────────────────────────────────────────┘
                      │
                      ▼
              ┌───────────────┐
              │    N=N+1      │──210
              └───────────────┘
                      │
                      ▼
No            N = FINAL VALUE − 1?               211
                      │ Yes
                      ▼
              ┌───────────────┐
              │     RET       │──212
              └───────────────┘
```

EP 1 426 732 A1

FIG.19A

FIG.19B

| AREA(N) | CONF_FLG 1 | CONF_FLG 2 |
|---|---|---|
| 31c1 | OK | — |
| 31c2 | OK | OK |
| 31c3 | OK | OK |
| 31c4 | OK | OK |
| 31c5 | OK | OK |
| 31c6 | OK | OK |
| 31c7 | OK | — |

FIG.20

```
┌─────────────────────────────────┐
│          SUBROUTINE             │
│ DISTANCE MEASURING RESULT       │──── 301
│ PROCESSING OF THE INVENTION     │
└─────────────────────────────────┘
                 │
                 ▼
         ┌──────────────┐
         │     N=1      │──── 302
         └──────────────┘
                 │
                 ▼
          ╱─────────────╲
         ╱  N,N+1,N+2    ╲        No
        ◁   CONF_FLG1     ▷───────────────┐
         ╲  ALL of OK ?  ╱                │
          ╲─────────────╱                 │
                 │ Yes                     │
                 ▼                         │
┌─────────────────────────────────┐       │
│ AVERAGE VALUE OF DISTANCE       │       │
│ MEASURING RESULT OF AREA N      │─ 304  │
│ AND DISTANCE MEASURING RESULT   │       │
│ OF AREA N+2 = S                 │       │
└─────────────────────────────────┘       │
                 │                         │
                 ▼                         │
┌─────────────────────────────────┐       │
│ DISTANCE MEASURING RESULT OF    │─ 305  │
│ N+1 = T                         │       │
└─────────────────────────────────┘       │
                 │                         │
                 ▼                         │
         ┌──────────────┐                 │
         │ ABS(S−T)=U   │──── 306         │
         └──────────────┘                 │
                 │                         │
                 ▼                         │
          ╱─────────────╲                 │
         ╱  U < JUDGMENT ╲    No           │
        ◁    VALUE?       ▷──────────────┐ │
         ╲─────────────── ╱              │ │
                 │ Yes                    │ │
                 ▼                        │ │
┌─────────────────────────────────┐      │ │
│ IT IS JUDGED THAT DISTANCE      │      │ │
│ MEASURING RESULT OF N+1 HAS     │─ 308 │ │
│ MUTUAL RELIABILITY (CONF_FLG2=OK)│      │ │
└─────────────────────────────────┘      │ │
                 │◄───────────────────────┘ │
                 ▼                           │
         ┌──────────────┐                    │
         │   N=N+1      │──── 310            │
         └──────────────┘                    │
                 │                           │
                 ▼                           │
          ╱─────────────╲                    │
    No   ╱   N = FINAL    ╲                   │
   ◄─────◁   VALUE − 1?    ▷                  │
         ╲───────────────╱                   │
                 │ Yes                        │
                 ▼                            │
         ┌──────────────┐                     │
         │    RET       │──── 312             │
         └──────────────┘                     │
```

311

# FIG.21

31a   31b   31

31d

31c   OUTPUT PART — 31e

32b   CPU9

A/D CONVERSION PART   IL   IR
32a

32d

CORRELATION ARITHMETIC PART   FILTER PROCESSING PART

32c

MAXIMUM CORRELATION DEGREE DETECTION PART   32e

32   ARITHMETIC PART

10   MEMORY PART

INTERPOLATION ARITHMETIC PART   32f

32g

PHASE DIFFERENCE DETECTION PART

RELIABILITY JUDGMENT PART

32h

32j   32i   CONTRAST CENTROID ARITHMETIC PART

AVERAGING PART

CONTROL CIRCUIT 5

51   52   53

MUTUAL RELIABILITY JUDGMENT PART   AVERAGE VALUE ARITHMETIC PART   ANGLE ARITHMETIC PART

DISPLAY DRIVE PART   PROJECTION IMAGE CREATION PART

7   6

# FIG.22A

1D

1E

1F

1G

$\theta 1'''$

$\theta 1''$

$\theta 1'$

REFERENCE POINT 3

REFERENCE POINT 2

REFERENCE POINT 1

# FIG.22B

y

P1  P2

Qn

Pn

Q2 ·······

Q1

y

x

$y = ax + b$

$$\left( \begin{array}{l} \Sigma = \overline{P1Q1}^2 + \overline{P2Q2}^2 + \cdots \overline{PnQn}^2 \\ \text{OBTAIN } a \text{ AND } b \text{ SO THAT} \\ \Sigma \text{ BECOMES MINIMUM} \end{array} \right)$$

EP 1 426 732 A1

FIG.23

```
┌─────────────────────────────┐
│      ANGLE DETECTION        │────── 401
│        OPERATION START      │
└─────────────────────────────┘
              │
              ▼
┌─────────────────────────────┐
│           i++               │────── 402
└─────────────────────────────┘
              │
              ▼
┌─────────────────────────────┐
│       AF-IC OPERATION       │────── 403
└─────────────────────────────┘
              │
              ▼
┌─────────────────────────────┐
│       DATA READOUT          │────── 404
│       A/D CONVERSION        │
└─────────────────────────────┘
              │
              ▼
┌─────────────────────────────┐
│  EACH AREA N (N = 1 ··· 11) │────── 405
│ CONTRAST CENTROID CALCULATION│
├─────────────────────────────┤
│  STORE AVERAGE VALUE OF EACH AREA │
│        N (N = 1 ··· 11)      │
│ CONTRAST CENTROID POSITION INTO RAM │
└─────────────────────────────┘
              │
              ▼
┌─────────────────────────────┐
│      SENSOR DATA FILTER     │────── 406
│        PROCESSING           │
└─────────────────────────────┘
              │
              ▼
┌─────────────────────────────┐
│  · CORRELATION ARITHMETIC   │────── 407
│  · INTERPOLATION ARITHMETIC │
│  · RELIABILITY JUDGMENT     │
│    (CONF PROCESSING)        │
└─────────────────────────────┘
              │
              ▼
┌─────────────────────────────┐
│  DISTANCE ADJUSTMENT (Data (N) ) │────── 408
└─────────────────────────────┘
              │
              ▼
┌─────────────────────────────┐
│    STORE EACH AREA RESULT   │────── 409
│    INTO RAM (AVERAGE VALUE) │
└─────────────────────────────┘
              │
              ▼
         ◇ i=EEPROM[Data] ◇────── 410
   No ────┘        │
                  Yes
                   ▼
┌─────────────────────────────┐
│ DISTANCE MEASURING RESULT PROCESSING │────── 411
│ · RELIABILITY OF DISTANCE   │
│             MEASURING RESULT │
│ · SMOOTHING PROCESSING      │
└─────────────────────────────┘
              │
              ▼
┌─────────────────────────────┐
│ LEAST SQUARES METHOD ANGLE ARITHMETIC │────── 412
└─────────────────────────────┘
              │
              ▼
         ┌─────────┐
         │   END   │────── 413
         └─────────┘
```

# FIG.24

```
┌─────────────────────────┐
│      SUBROUTINE         │
│  DISTANCE MEASURING     │── 501
│  RESULT PROCESSING      │
└─────────────────────────┘
            │
            ▼
      ┌──────────┐
      │  N=1++   │── 502
      └──────────┘
            │
            ▼
       ╱─────────╲
  No  ╱ N,N+1,N+2 ╲ ── 503
 ◄───╱ CONF_FLG1   ╲
      ╲ ALL of OK ?╱
       ╲─────────╱
            │ Yes
            ▼
┌─────────────────────────────┐
│ AVERAGE VALUE OF DISTANCE   │
│ MEASURING RESULT OF AREA N  │── 504
│ AND DISTANCE MEASURING      │
│ RESULT OF AREA N+2 = S      │
└─────────────────────────────┘
            │
            ▼
┌─────────────────────────────┐
│ DISTANCE MEASURING RESULT   │── 505
│       OF N+1 = T            │
└─────────────────────────────┘
            │
            ▼
      ┌──────────────┐
      │ ABS(S/T-1)=U │── 506
      └──────────────┘
            │
            ▼
       ╱─────────────╲
  No  ╱               ╲ ── 507
 ◄───╱ U<Eeprom[DATA]? ╲
      ╲               ╱
       ╲─────────────╱
            │ Yes
            ▼
┌─────────────────────────────┐
│ STORE(SUM OF DISTANCE       │
│ MEASURING RESULTS OF 3      │── 508
│ AREAS)/3 = Distance(N)      │
│ INTO RAM                    │
└─────────────────────────────┘
            │
            ▼
┌─────────────────────────────┐
│ (SUM OF CENTROID RESULTS    │── 509
│ OF 3 AREAS)/3 = Balance(N)  │
└─────────────────────────────┘
            │               510
            ▼
┌─────────────────────────────┐
│ Xbalance(N)                 │
│ =(Balance(n)-81)×0.015      │
│    ×Distance(N)/13.2        │
└─────────────────────────────┘
            │
            ▼
       ╱─────────╲
  No  ╱           ╲ ── 511
 ◄───╱   N=9?      ╲
      ╲           ╱
       ╲─────────╱
            │ Yes
            ▼
      ┌──────────┐
      │   END    │── 512
      └──────────┘
```

Annotations:

RELIABILITY OF DISTANCE MEASURING RESULT (504–507)

LINEAR AVERAGING PROCESSING (508)

X AXIS CONVERSION
0.015: SENSOR (PIXEL) PITCH
13.2: FOCAL DISTANCE
81: PIXEL NO. OF REFERENCE PART 31c CORRESPONDING TO ORIGIN (O) OF X AXIS

# FIG.25

$$X=(\alpha-81)\times 0.015\times d/13.2$$

CENTER OF
OPTICAL AXIS

X

d

0

x

31c

162 ···|··· 81 ········ 1 SENSOR NUMBER

α

f (FOCAL DISTANCE) = 13.2

(0.015: PIXEL PITCH)

50

## FIG.26

European Patent
Office

**EUROPEAN SEARCH REPORT**

Application Number

EP 03 02 7395

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 455 647 A (FUJIWARA AKIHIRO) 3 October 1995 (1995-10-03) | 5-7, 20-24 | G01B11/26 G01C3/00 |
| Y | * column 3, line 23 - column 5, line 18; figures 1,2 * | 1-4,8-19 | H04N5/74 G03B21/53 |
| X,D | PATENT ABSTRACTS OF JAPAN vol. 2000, no. 07, 29 September 2000 (2000-09-29) & JP 2000 122617 A (TOSHIBA CORP;TOSHIBA AVE CO LTD), 28 April 2000 (2000-04-28) | 5-7, 20-24 | |
| Y | * abstract * | 1-4,8-19 | |
| X | PATENT ABSTRACTS OF JAPAN vol. 2000, no. 04, 31 August 2000 (2000-08-31) & JP 2000 019638 A (NEC CORP), 21 January 2000 (2000-01-21) | 5-7, 20-24 | |
| Y | * abstract * | 1-4,8-19 | |
| Y | US 5 155 347 A (NISHIBE TAKASHI) 13 October 1992 (1992-10-13) * column 2, line 64 - column 12, line 11; figures 1-7 * | 1-24 | TECHNICAL FIELDS SEARCHED (Int.Cl.7) G01B G01C H04N G03B |
| Y | US 6 263 164 B1 (SATO TAKUMA ET AL) 17 July 2001 (2001-07-17) * column 11, line 1 - column 12, line 51 * * column 19, line 12 - column 22, line 56; figures 5-8 * | 1-24 | |
| X | DE 195 45 589 A (SCHIELE JOSEF ;WEIGEL HANNES (DE); PERZ RAIMUND DIPL ING FH (DE)) 12 June 1997 (1997-06-12) * column 3, line 2 - column 8, line 24; figures 1-6 * | 5-7, 20-24 | |

-/--

The present search report has been drawn up for all claims

| Place of search | Date of completion of the search | Examiner |
|---|---|---|
| MUNICH | 6 April 2004 | Beyfuß, M |

EPO FORM 1503 03.82 (P04C01)

## EUROPEAN SEARCH REPORT

**European Patent Office**

Application Number

EP 03 02 7395

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 974 811 A (HEWLETT PACKARD CO) 26 January 2000 (2000-01-26) * paragraphs [0036]-[0055]; figures 3A,3B,4 * ----- | 5-7, 20-22,24 | |

TECHNICAL FIELDS SEARCHED (Int.Cl.7)

The present search report has been drawn up for all claims

| Place of search | Date of completion of the search | Examiner |
|---|---|---|
| MUNICH | 6 April 2004 | Beyfuß, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**            EP 03 02 7395

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2004

| Patent document cited in search report | | Publication date | Patent family member(s) | | Publication date |
|---|---|---|---|---|---|
| US 5455647 | A | 03-10-1995 | JP | 4181935 A | 29-06-1992 |
| JP 2000122617 | A | 28-04-2000 | NONE | | |
| JP 2000019638 | A | 21-01-2000 | NONE | | |
| US 5155347 | A | 13-10-1992 | JP | 2881995 B2 | 12-04-1999 |
| | | | JP | 4088326 A | 23-03-1992 |
| | | | DE | 4125537 A1 | 06-02-1992 |
| US 6263164 | B1 | 17-07-2001 | JP | 8262317 A | 11-10-1996 |
| | | | JP | 8285580 A | 01-11-1996 |
| | | | JP | 8286228 A | 01-11-1996 |
| | | | JP | 8327883 A | 13-12-1996 |
| | | | JP | 8327884 A | 13-12-1996 |
| | | | US | 5923910 A | 13-07-1999 |
| | | | DE | 19606694 A1 | 26-09-1996 |
| | | | DE | 19655197 C2 | 28-11-2002 |
| | | | DE | 19655198 C2 | 28-11-2002 |
| | | | DE | 19655199 C2 | 05-06-2003 |
| | | | DE | 19655200 C2 | 05-12-2002 |
| | | | DE | 19655202 C2 | 05-12-2002 |
| | | | DE | 19655203 C2 | 05-06-2003 |
| | | | DE | 19655204 C2 | 21-11-2002 |
| | | | FR | 2730829 A1 | 23-08-1996 |
| | | | GB | 2298331 A ,B | 28-08-1996 |
| | | | GB | 2338133 A ,B | 08-12-1999 |
| | | | GB | 2338134 A ,B | 08-12-1999 |
| | | | GB | 2338135 A ,B | 08-12-1999 |
| | | | GB | 2338136 A ,B | 08-12-1999 |
| | | | GB | 2338137 A ,B | 08-12-1999 |
| | | | GB | 2338138 A ,B | 08-12-1999 |
| | | | GB | 2338139 A ,B | 08-12-1999 |
| | | | JP | 8292364 A | 05-11-1996 |
| | | | US | 6088536 A | 11-07-2000 |
| | | | US | 6112030 A | 29-08-2000 |
| | | | US | 6070017 A | 30-05-2000 |
| | | | US | 6169855 B1 | 02-01-2001 |
| | | | US | 6081671 A | 27-06-2000 |
| | | | US | 6122450 A | 19-09-2000 |
| | | | JP | 8292367 A | 05-11-1996 |
| | | | JP | 8292365 A | 05-11-1996 |
| DE 19545589 | A | 12-06-1997 | DE | 4443413 A1 | 13-06-1996 |
| | | | DE | 19545589 A1 | 12-06-1997 |
| | | | AT | 178987 T | 15-04-1999 |

EP 1 426 732 A1

## ANNEX TO THE EUROPEAN SEARCH REPORT
## ON EUROPEAN PATENT APPLICATION NO.

EP 03 02 7395

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2004

| Patent document cited in search report | | Publication date | Patent family member(s) | | Publication date |
|---|---|---|---|---|---|
| DE 19545589 | A | | AU<br>DE<br>WO<br>EP | 4432096 A<br>59505674 D1<br>9618083 A1<br>0796420 A1 | 26-06-1996<br>20-05-1999<br>13-06-1996<br>24-09-1997 |
| EP 0974811 | A | 26-01-2000 | EP<br>JP | 0974811 A1<br>2000089092 A | 26-01-2000<br>31-03-2000 |

EPO FORM P0459

For more details about this annex : see Official Journal of the European Patent Office, No. 12/82